# EUROPEAN PATENT APPLICATION

(11) **EP 1 622 042 A1**
(43) Date of publication of application: **01.02.2006**
(21) Application number: 04729223.0
(22) Date of filing: 23.04.2004
(51) Int. Cl.: G06F 17/30

(54) **DATABASE DEVICE, DATABASE SEARCH DEVICE, AND METHOD THEREOF**

(30) Priority: 25.04.2003 JP 2003120876
(71) Applicant: Hewlett-Packard Development Company, L.P., Houston, Texas 77070 (US)
(72) Inventor: YAMAMOTO, Akio, Yokohama-shi, Kanagawa 227-0061 (JP); NAKAGAWA, Shinya, Mitaka-shi, Tokyo 181-0012 (JP); SHIMIZU, Hiroyuki, Musashino-shi, Tokyo 180-0001 (JP)
(74) Representative: Exell, Jonathan Mark
(86) International application number: PCT/JP2004/005860
(87) International publication number: WO 2004/097679

(57) **Abstract**

There is provided a database server capable of easily adding various kinds of associated data without modifying the structure of the database. A heading node (T node) is correlated with an associated node (A node) and a relation role R is defined between the T node and the A node associated with it. Furthermore, each of the T node and the A node is added with an identifier (ID), its attribute (node type), and a name (node name). The data having such a structure is stored in a relation/role table (AR table) composed of an entry containing ID of the A node and T node associated with each other and the relation role R defined between them and in an identifier table (ID table) containing the ID, attribute, and name of the A node and the T node, so that the data can be searched.

## Description

### Technical Field

The present invention relates to a method of storing data and a structure of data to be stored.

More specifically, the present invention relates to a method of storing a series of data associated with one another and a structure of data to be stored.

### Background Art

An apparatus called a relational database has been used for storing associated data and for searching for such stored data.

Further, for example, Non-Patent Document 1, Patent Documents 1 and 2 disclose methods of storing associated data and methods of searching for such stored data.

However, in the relational database, it is not easy to change a structure (schema) of the completed database.

In the methods disclosed in Non-Patent Document 1, Patent Documents 1 and 2, descriptive contents of the data become complex, and notation/storage methods for the data are not uniquely determined.

### [Non-Patent Document 1]

The Associative Model of Data White Paper (Lazy Software, September 2000)

### [Patent Document 1]

JP 2001-209647 A

### [Patent Document 2]

WO 00/29980

### Disclosure of the Invention

### [Problems to be solved by the Invention]

The present invention has been made in view of the foregoing background, and an object of the present invention is to provide a database server in which various kinds of associated data are easily added without changing a structure of a database, a database search device for searching such the database, and methods used therefor.

Further, the present invention has an object to provide a database server, in which data is easily described and notation/storage methods for data are unique, a database search device for searching such the database, and methods used therefor.

### [Means for solving the Problems]

To achieve the above-mentioned objects, the present invention provides a database server for associating one or more association nodes with one or more topic nodes to structure a database, each of the association nodes being associated with the one or more topic nodes, and an association attribute indicating an association being defined respectively between the associated association nodes and the topic nodes, the database server including: a first entry creation means for creating a first entry including an identifier indicating any of the association nodes, an identifier indicating a topic node associated with the association node, and an association attribute defined between the association node and the topic node; and a first database for storing the one or more of the created first entries.

Preferably, the association attribute defined between the associated association node and the topic node indicates a role defined between the nodes.

Preferably, for each of the topic nodes, a topic content indicating a content of the topic node is defined, and the database server further includes: a second entry creation means for creating a second entry including an identifier indicating any of the topic nodes, and the topic content defined for the topic node; and second database for storing the one or more of the created second entries.

Preferably, the topic content includes a name of the topic node.

Preferably, for each of the association nodes, an association node attribute indicating an attribute of the association node is defined, and the database server further includes: a third entry creation means for creating a third entry including an identifier indicating any of the association nodes, and the association node attribute of the association node; and third database for storing the one or more of the created third entries.

Preferably, for each of the topic nodes, a topic attribute indicating an attribute of the topic node is further defined, and the second entry creation means further creates the second entry including the identifier indicating any of the topic nodes, and the topic content and the topic attribute defined for the topic node.

Preferably, the topic node is associated with the one or more association nodes, and when the topic node is associated with plural association nodes, the plural association nodes are associated with one another via the topic node associated with the association nodes, and the second database stores identifiers and topic contents of plural topic nodes associated with the association nodes as a set of plural second entries including the identifiers of the topic nodes.

Preferably, the topic node is associated with the one or more association nodes, and when the topic node is associated with plural association nodes, the plural association nodes are associated with one another via the topic node associated with the association nodes, and the second database stores identifiers, topic contents and topic attributes of plural topic nodes associated with the association nodes as a set of plural second entries including the identifiers of the topic nodes.

Preferably, the topic node is associated with the one or more association nodes, and when the topic node is associated with plural association nodes, the plural association nodes are associated with one another via the topic node associated with the association nodes, and the first database stores associations between the association nodes and the plural topic nodes associated with the association nodes as a set of plural first entries including the identifiers of the association nodes.

Preferably, when there is an association between the two or more association nodes, a new association node is provided, and new topic nodes are provided among the new association node and the association nodes, a first association attribute is defined by a relation among the new association node and the association nodes and a second association attribute is defined by a relation between the new topic node and the new association node, the first entry creation means creates one or more first entries including the identifier indicating any of the association nodes, an identifier indicating any of the new topic nodes, and the first association attribute, and also creates one or more first entries including an identifier indicating any of the new association nodes, the identifier indicating any of the new topic nodes, and the second association attribute, and the first database stores the created first entries.

Preferably, in the new topic node, a topic content indicating a content of the topic node and a topic attribute indicating an attribute of the topic node are defined, the second entry creation means creates one or more second entries including the new topic node identifier, the topic content, and the topic attribute, and the second database stores the created second entries.

Preferably, the third entry creation means creates one or more third entries including the identifier indicating any of the association nodes and its association attribute, and the third database stores the created third entries.

Further, the present invention provides a method of creating a database by associating one or more association nodes with one or more topic nodes to structure a database, in which each of the association nodes is associated with the one or more topic nodes, and an association attribute indicating an association is defined respectively between the associated association nodes and the topic nodes, includes: a first entry creation step of creating a first entry including an identifier indicating any of the association nodes, an identifier indicating a topic node associated with the association node, and an association attribute defined between the association node and the topic node; and a first entry storage step of storing the one or more of the created first entries in the first database.

Further, the present invention provides a first program for creating a database by associating one or more association nodes with one or more topic nodes to create a database, each of the association nodes being associated with the one or more topic nodes, and an association attribute indicating an association being defined respectively between the associated association nodes and the topic nodes, the first program causing a computer to execute: a first entry creation step of creating a first entry including an identifier indicating any of the association nodes, an identifier indicating a topic node associated with the association node, and an association attribute defined between the association node and the topic node; and a first entry storage step of storing the one or more of the created first entries in the first database.

Further, the present invention provides a database search device for searching: a first database for storing one or more association nodes, one or more topic nodes respectively associated with the association nodes, and an association attribute defined respectively between the association nodes and the topic nodes associated together, and for storing one or more first entries each including an identifier indicating any of the association nodes, an identifier indicating a topic node associated with the association node, and an association attribute defined between the association node and the topic node; and a second database for storing one or more second entries including an identifier indicating any of the topic nodes and the topic content defined for the topic node, as data of the topic node, includes: search condition receiving means for receiving a search condition including first condition data indicating one or more arbitrary topic contents and one or more arbitrary association attributes, and second condition data indicating one or more second association attributes of the topic nodes as search objects; and search means for searching the first database and the second database based on the received search condition for data of the topic nodes as the search objects.

Preferably, the search means performs: (a) a process for searching the second database and creating a topic node identifier set that is the topic content indicated by the first condition data and includes an identifier of the topic node in the second entry including any of the contents; (b) a process for searching the first database and creating an association node identifier set including an identifier of the association node in the first entry including any one of the topic node identifiers belonging to the association node identifier set and any one of the association attributes indicated by the first condition data; (c) a process for searching the first database and creating a topic node identifier set of identifiers of the topic nodes in the first entry including any one of the identifiers belonging to the association node identifier set and any one of the association attributes indicated by the second condition data; and (d) a process for searching the second database and creating a search result of the topic node as the search object based on the data in the second entry including the identifier belonging to the topic node identifier set.

Preferably, the search result obtained in the process (d) includes the topic content of the topic node, and the search means repeats by plural times: (e) a process for searching the second database and creating a topic node identifier set including identifiers of the topic nodes that are in the topic content indicated by the first condition data or in the search result and that are in the second entry including any of the topic contents; and the processes (b) to (d), and in the last process (d), the search means creates the search result of the topic node as the search object based on data in the second entry including the identifier belonging to the topic node identifier set.

Preferably, for each of the topic nodes, a topic attribute indicating an attribute of the topic node is further defined; the second database stores the second entry including the identifier, the topic content, and the topic attribute; the search condition receiving means receives search conditions including the first condition data, the second condition data, and the third condition data indicating the topic attribute, and the search means searches the first database and the second database for the data of the topic node as the search object based on the received search conditions.

Preferably, the search means performs: (f) a process for searching the second database and creating a topic node identifier set that is the topic content indicated by the first condition data and is the topic content in the second entry and a topic attribute indicated by the third condition data and that includes an identifier of the topic node in the second entry including the topic attribute in the second entry; (b) a process for searching the first database and creating an association node identifier set including an identifier of the association node in the first entry including any one of the topic node identifiers belonging to the association node identifier set and any one of the association attributes indicated by the first condition data; (c) a process for searching the first database and creating a topic node identifier set of identifiers of the topic nodes in the first entry including any one of the identifiers belonging to the association node identifier set and any one of the association attributes indicated by the second condition data; and (d) a process for searching the second database and creating a search result of the topic node as the search object based on the data in the second entry including the identifier belonging to the topic node identifier set.

Preferably, the search result obtained in the process (d) includes the topic content and the topic attribute and the topic attribute of the topic node, (g) a process for searching the second database and creating a topic node identifier set including identifiers of the topic nodes in the second entry that are topic contents indicated by the first condition data or topic contents in the search result, and are topic contents in the second entry and topic attributes indicated by the third condition data or topic attributes in the search result, and includes topic attributes in the second entry; and the processes (b) to (d), and in the last process (d), the search means creates the search result of the topic node as the search object based on data in the second entry including the identifier belonging to the topic node identifier set.

Preferably, in the database search device for further searching a third database storing one or more entries each including the identifier indicating any of the association nodes and an attribute of the association node, the search condition receiving means receives search conditions further including fourth condition data indicating the attribute of the association node, and the search means searches the first database, the second database, and the third database based on the received search conditions for the data of the topic node as the search object.

Preferably, in the database search device further including identifier set creation means for creating a set of identifiers of association nodes in an entry including the attributes of the association nodes indicated by the fourth condition in the received search conditions of the entries stored in the third database, the search means searches the data of the topic node as the search object using the created association node identifier set.

Further, the present invention provides a database search method of searching: a first database for storing one or more association nodes, one or more topic nodes respectively associated with the association nodes, and an association attribute defined respectively between the association nodes and the topic nodes associated together, and for storing one or more first entries each including an identifier indicating any of the association nodes, an identifier indicating a topic node associated with the association node, and an association attribute defined between the association node and the topic node; and a second database for storing one or more second entry including an identifier indicating any of the topic nodes, and the topic content defined for the topic node, as data of the topic node, includes: a search condition receiving step of receiving a search condition including first condition data indicating one or more arbitrary topic contents and one or more arbitrary association attributes, and second condition data indicating one or more second association attributes of the topic nodes as search objects; and a search step of searching the first database and the second database based on the received search condition for data of the topic nodes as the search objects.

Further, the present invention provides a second program for searching: a first database for storing one or more association nodes, one or more topic nodes respectively associated with the association nodes, and an association attribute defined respectively between the association nodes and the topic nodes associated together, and for storing one or more first entries each including an identifier indicating any of the association nodes, an identifier indicating a topic node associated with the association node, and an association attribute defined between the association node and the topic node; and a second database for storing one or more second entries including an identifier indicating any of the topic nodes, as data of the topic node, and the topic content defined for the topic node, the second program causing a computer to execute: a search condition receiving step of receiving a search condition including first condition data indicating one or more arbitrary topic contents and one or more arbitrary association attributes, and second condition data indicating one or more second association attributes of the topic nodes as search objects; and a search step of searching the first database and the second database based on the received search condition for data of the topic nodes as the search objects.

### [Effect of the Invention]

According to the present invention, it is possible to obtain a database server in which various kinds of associated information is easily added without changing a structure of a database, a database search device for searching such a database, and methods used therefor.

Also, according to the present invention, it is possible to obtain a database server where data is easily described and notation/storage methods for data are unique, a database search device capable of searching such a database, and methods used therefor.

### Brief Description of the Drawings

FIG. 1 is a diagram showing a data model when associative network data is converted according to the present invention;
FIGS. 2 are diagrams each showing a data structure in which a series of (n) data be stored, which are associated with one another, are converted in accordance with the data model shown in FIG. 1;
FIGS. 3 are diagrams each showing an example of a method of expressing an association between associated nodes;
FIG. 4 is a diagram showing a structure of associative network data in which data of first and second examples are expressed by using nodes and edges representing associations between the nodes;
FIG. 5 is a flowchart of a preferred embodiment of the present invention;
FIG. 6 is an exemplification diagram showing a configuration of a database system (DB system) according to the present invention;
FIG. 7 is an exemplification diagram illustrating a hardware configuration of the DB server shown in FIG. 6 and a PC;
FIG. 8 is a diagram showing the data associations exemplified in FIG. 3(a) in a rewritten form;
FIG. 9 is a diagram showing the data structure of FIG. 8 in a generalized form;
FIG. 10 is a diagram showing the data associations of FIGS. 3(b) and 4 in a generalized form;
FIG. 11 is a diagram showing an association role (AR) table used for storing the data of the structure shown in FIG. 9;
FIG. 12 shows a T node identifier (ID) table used for storing the data of the structure shown in FIG. 9;
FIG. 13 shows an A node identifier (ID) table used for storing the data of the structure shown in FIG. 9;
FIG. 14 is a diagram illustrating a data search method in the DB server shown in FIGS. 6 and 7;
FIG. 15 is a first flowchart showing an overall search process (S20) in the DB server shown in FIGS. 6 and 7;
FIG. 16 is a flowchart showing an associated node selection process (S22) based on a search filter shown in FIG. 15;
FIG. 17 is a flowchart showing a process (S24) of obtaining a node ID and a node name shown in FIGS. 15 and 16;
FIG. 18 is a flowchart showing a structure of a DB program 2 run on the DB server shown in FIGS. 6 and 7;
FIG. 19 is an exemplification diagram illustrating data input to the DB server (DB program; FIG. 18) shown in FIGS. 6 and 7, and search conditions contained therein for searching for data;
FIG. 20 illustrates an exemplification AR table created by an AR entry creation unit (FIG. 18) and an ARDB management unit and stored in the ARDB;
FIG. 21 illustrates an exemplification T node ID table created by an ID entry creation unit (FIG. 18) and an IDDB management unit and stored in the IDDB;
FIG. 22 illustrates an exemplification A node ID table created by the ID entry creation unit (FIG. 18) and the IDDB management unit; and
FIG. 23 is an exemplification diagram illustrating a configuration of a second DB system.

### Best Mode for carrying out the Invention

### [Development for completing the Present Invention]

To facilitate understanding of the present invention, a development for completing the present invention will be described first.

Data containing various elements are efficiently retrieved, and the data is stored.

It is desired that data is read from the stored data when necessary and the data is accurately reproduced.

In general, in a partial set R ⊂ A x B of Cartesian product of sets A x B, notation of aRb with respect to an ordered pair (a, b) ∈ R means that "a has a relation R with b".

As a simple example of data, "playwright Shakespeare wrote drama Hamlet" will be taken.

The data is in binary relation. Thus, the data "playwright Shakespeare wrote drama Hamlet" is expressed in "aRb" in which a is "playwright Shakespeare", R is "author-work", and b is "drama Hamlet".

When they are stored in a database, the data is stored as "a", "R" and "b", and can be uniquely reproduced when they are read.

However, when the number of data components increases, i.e., when the data is not in binary relation but in n-ary relation, a series of such associated data is expressed in a hypergraph structure, and processing of the data is not simple.

Accordingly, a method of partitioning the n-ary relation into binary relations, expressing the data in a combination of the binary relations and storing the data in the database is generally employed.

As a first example, "playwright Shakespeare wrote drama Hamlet in United Kingdom in about 1600" will be taken.

This example shows a quaternary relation. In binary relation, however, the data is expressed in a combination of six binary relations as shown in Table 1 because of 4c2 = 6.

**Table 1**

| a | R | b |
|---|---|---|
| Playwright Shakespeare | Author-Work | Drama Hamlet |
| Playwright Shakespeare | Author-Creation era | About 1600 |
| Playwright Shakespeare | Author-Creation country | United Kingdom |
| Drama Hamlet | Work-Creation era | About 1600 |
| Drama Hamlet | Work-Creation country | United Kingdom |
| About 1600 | Creation era-Creation country | United Kingdom |

In other words, when n increases, expression of a binary relation of the number of nC2 is necessary to express the n-ary relation.

When "playwright Shakespeare wrote drama Twelfth Night" is taken as a second example and expressed in a combination of binary relations, a tertiary relation, i.e., n = 3, is set, realizing 3C2 = 3. A result is as shown in Table 2.

**Table 2**

| a | R | b |
|---|---|---|
| Playwright Shakespeare | Author-Work | Drama Twelfth Night |
| Playwright Shakespeare | Author-Creation era | About 1600 |
| Drama Twelfth Night | Work-Creation era | About 1600 |

In this case, storage of information of the first example and information of the second example in the same database causes a problem that the same binary relation composed of "playwright Shakespeare" - "author-creation era" - "about 1600" is stored.

Another problem that occurs is impossibility of judging what combination of the binary relations shown as the first and second examples should be employed to reproduce original information.

Those problems can be solved by adding an identifier to each of the binary relations. However, there is a drawback of complexity in data structure and processing.

As a method of storing data having binary or more data components, a storage method using a relational database is known.

This method defines/creates a table in which data item names (data attributes) are allocated to columns, and sequentially inputs specific data to lines of the table.

Description will be made by taking an example of "playwright Shakespeare wrote drama Hamlet in United Kingdom in about 1600".
(1) "Who", (2) "what", (3) "when", (4) "where", (5) "why", and (6) "how" can be specified as data item names.

Corresponding to these data items, data of (1) "playwright Shakespeare", (2) "drama Hamlet", (3) "about 1600", (4) "United Kingdom", (5) "blank", and (6) "wrote" can be stored.

However, the following problems are inherent in the method.
(1) It is not easy to add data item names later in accordance with obtained data. Addition is not a problem in the case of data composed of stereotyped components. In the case of inputting data containing various components, however, it is necessary to change a schema for adding data item names each time new components increase. Scheme changing is generally difficult at the time of inputting data on-line.
(2) Since the later addition is not easy, during first database construction, a schema may be constructed by listing the maximum number of data items. However, schema construction even for data less likely to be input as data items inevitably leads to a reduction in efficiency of memory use.

To solve such problems, a data storage method based on "Associative Model of Data" developed by "Lazy Software" Inc. (England) has been proposed as a model alternative to a conventional relational data model.

According to this data model, information is processed in terms of association between objects, and this association is expressed in a "Source-Verb-Target" syntax.

This model solves some of the problems inherent in the storage method based on the relational database.

However, the model has the following problems. In the case of processing a complex data relation, a method of expressing a relation between data is complex and not intuitive. Expression is not uniquely established because an n-ary relation is expressed in the form of a binary tree. An operator can optionally change the data structure when the data is stored in the database. Thus, in the case of reading and reproducing the data from the database, original information cannot be accurately reproduced.

As described above, the relational database has conventionally been known as the method of storing the plurality of data associated with one another.

According to this method, data items to be stored are preset, and data relevant to the data items are stored.

The method is advantageous in that the data relation can be easily grasped. However, the addition of data items to the constructed database, i.e., the changing of the structure (schema) of the constructed database, is not easy.

In the case of the data corresponding to the data items added later, a blank area is generated with respect to the stored data, causing a problem about a reduction in memory use efficiency.

On the other hand, in the case of "Associative Model of Data" proposed by the Lazy Software Inc., the problems about the difficulty in adding data items and the reduction in the memory use efficiency are solved. However, the data descriptive contents become complex, and the data structure is not intuitive, causing another problem that the data notation/storage method is not unique.

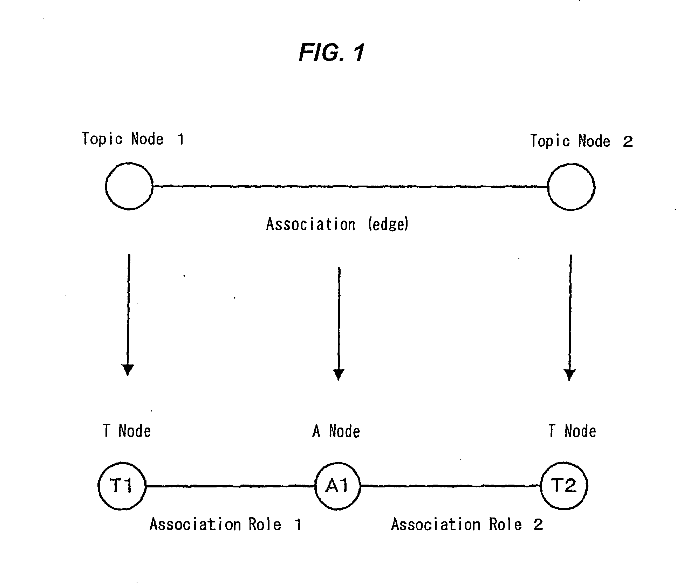

According to the present invention, for associative network data composed of topic nodes and edges representing associations between those nodes, the associations (edges) are newly set as association nodes (referred to as "A nodes" hereinafter in the specification), and a data model composed of edges in which roles (referred to as "association roles" hereinafter in the specification) played by topic nodes associated with the A nodes (referred to as "T nodes" hereinafter in the specification) in the associations are attributes of the edges is defined (FIG. 1).

One A node, one T node and an association role therebetween are extracted as basic components from the data structure converted in accordance with the model, and associated with lines (records) of an association role table (referred to as "AR table" hereinafter in the specification) defined in the relational database as shown in Table 3, and a storage/management method is realized by a relational database management system.

**Table 3**

| A node | T node | Association role |
|---|---|---|
| A1 | T1 | Association role 1 |
| A1 | T2 | Association role 2 |

Accordingly, new attribute information regarding certain data (topic node) is defined as another associative data, and expressed as data associated with a line of the AR table by using a combination of corresponding A and T nodes and an edge between the nodes (i.e., basic components in the data model of the present invention), whereby new attribute information can be added without changing the existing table structure (database schema).

Furthermore, identifiers are assigned to the A and T nodes to enable unique identification. For the identifiers, an identifier table (referred to as "ID table" hereinafter in the specification) is defined which contains node types representing node attribute types and node names representing attribute values, i.e., specific contents of the nodes (Table 5).

The data is stored/managed by the relational database management system as in the case of the AR table.

One T node is newly added as data for describing a specific meaning of an association indicated by a certain A node, and these two nodes are associated with each other based on an association role predefined as "reification".

By defining/describing an association between the T node and a T node newly added similarly for another A node, it is possible to express a relation between the associations represented by the two original A nodes.

The T node associated based on the association role "reification" particularly introduced to describe the meaning of the A node can be stored/managed by the AR table.

By managing the nodes using the ID table and the AR table, a data expression method capable of expressing not only the association between the A and T nodes but also the association between the A nodes is realized.

In general, a set of nC2 data is necessary when a data set composed of n data having one common association is expressed in binary relation. According to the present invention, however, a set of n data is only necessary.

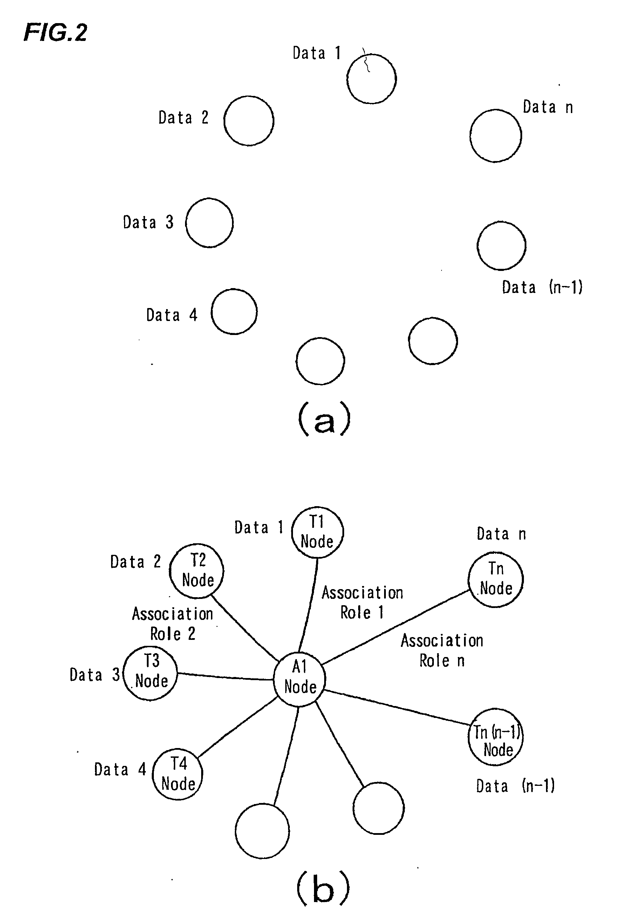

In other words, for a data set composed of n data elements having one common association (FIG. 2(a)), when the data is stored in the database, one new node (A node) common to the data set is added, and then an association role is defined for each element (FIG. 2(b)).

Thus, the data structure of the present invention can be constructed by defining the "A node", the "T node" and the "association role" as one set of data (Table 4).

**Table 4**

| A node | T node | Association role |
|---|---|---|
| A1 | T1 | Association role 1 |
| A1 | T2 | Association role 2 |
| A1 | T3 | Association role 3 |
| A1 | T4 | Association role 4 |
| : | : | : |
| A1 | T(n-1) | Association role (n-1) |
| A1 | Tn | Association role n |

"A1" used in FIG. 2(b) and Table 4 is an identifier assigned to the A node, indicating that data (T nodes) having other identifiers "T1" to "Tn" assigned thereto has a certain common association.

If identifiers assigned to the A nodes are different, a series of data have a certain common association in another sense.

Furthermore, for the A and T nodes to which the identifiers have been assigned, an ID table having a node type and a node name as data attributes is created as shown in Table 5.

**Table 5**

| Node ID | Node Type | Node Name |
|---|---|---|
| A1 | A Node Type 1 | A Node Name 1 |
| T1 | T Node Type 1 | T Node Name 1 |
| T2 | T Node Type 2 | T Node Name 2 |
| : | : | : |
| Tn | T Node Type n | T Node Name n |

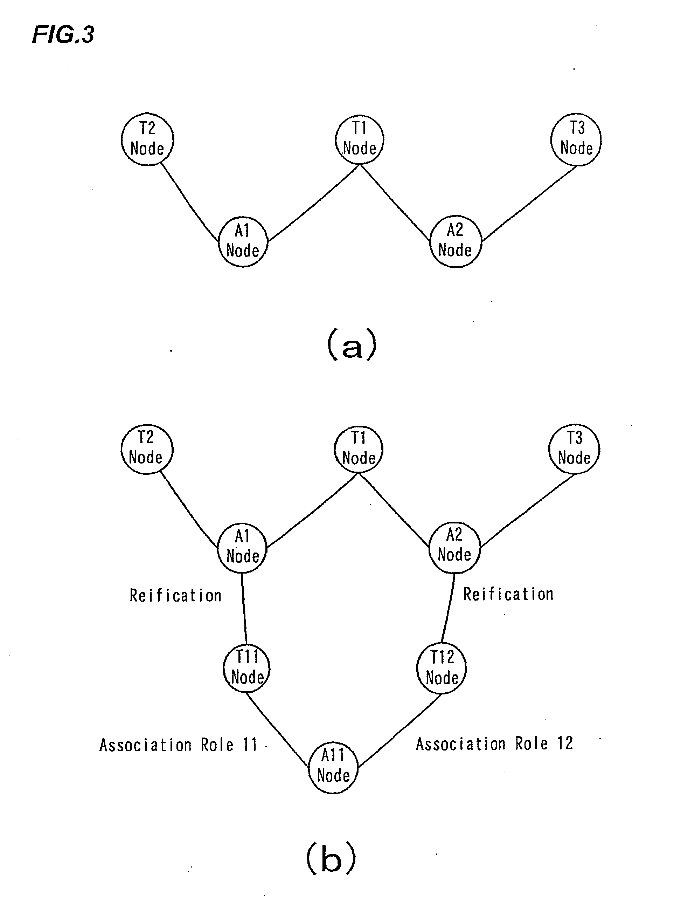

For associative network data in which T nodes T1 and T2 are associated with each other by an A node A1 and T nodes T1 and T3 are associated with each other by an A node A2 (FIG. 3(a)), a T node (identifier T11) is newly added to describe a specific meaning of an association indicated by the A node A1, and associated with the A node A1 based on an association role predefined as "reification".

Similarly, the A node A2 is associated with a new T node T12 based on an association role "reification", and an association between the two T nodes T11 and T12 is defined by using the A node A11 (FIG. 3(b)).

Thus, a relation between the two original A nodes A1 and A2 can be expressed by using an AR table similar to that shown in Table 6.

**Table 6**

| A node | T node | Association role |
|---|---|---|
| A1 | T11 | Reification |
| A2 | T12 | Reification |
| A11 | T11 | Association role 11 |
| A11 | T12 | Association role 12 |

### [Data Storage Method/Data Structure]

Hereinafter, the data storage method and the data structure of the present invention will be described.

As a specific example, "playwright Shakespeare wrote drama Hamlet in United Kingdom in about 1600" will be described as first data.

The data represents a quaternary relation having elements of (1) "playwright Shakespeare", (2) "drama Hamlet", (3) "about 1600", and (4) "United Kingdom".

When the data is partitioned into binary relations to express a relation thereof, the data is expressed in a combination of six relations as shown in Table 7 because of 4C2 = 6.

**Table 7**

| Topic node 1 | Edge (association) | Topic node 2 |
|---|---|---|
| Playwright Shakespeare | Author-Work | Drama Hamlet |
| Playwright Shakespeare | Author-Creation era | About 1600 |
| Playwright Shakespeare | Author-Creation country | United Kingdom |
| Drama Hamlet | Work-Creation era | About 1600 |
| Drama Hamlet | Work-Creation country | United Kingdom |
| About 1600 | Creation era-Creation country | United Kingdom |

The information is converted according to the present invention. First, the first data is converted.

"Playwright Shakespeare" in the topic node 1 indicates "playwright" in this information. Thus, the data is partitioned into "playwright" and "Shakespeare", the "Shakespeare" is set as a T node, and the "author" is set as an association role. As described later, the "playwright" is set as a node type of a T node.

For the edge "author-work" indicating an association, an A node is added for "authorship of Hamlet" so as to indicate that the series of information belong to the same group.

The data of "authorship of Hamlet" is used for showing that the series of information belong to the same group. Thus, other expressions are allowed as long as the information can be differentiated from information of the other group.

Description in the structure of "A node" - "T node" - "association role" is as shown in Table 8.

**Table 8**

| A node | T node | Association role |
|---|---|---|
| Authorship of Hamlet | Shakespeare | Author |

Similarly, "drama Hamlet" in the topic 2 is converted as shown in Table 9 because it is "work" in this information.

Additionally, "drama" is set as a node type of a T node.

**Table 9**

| A node | T node | Association role |
|---|---|---|
| Authorship of Hamlet | Hamlet | Work |

Next, similar conversion of the second data is as shown in Table 10.

**Table 10**

| A node | T node | Association role |
|---|---|---|
| Authorship of Hamlet | Shakespeare | Author |
| Authorship of Hamlet | About 1600 | Creation era |

Here, the data "authorship of Hamlet", "Shakespeare" and "author" can be omitted because they are redundant data. Thereafter, all the data is similarly converted, redundant data is omitted, and a result is as shown in Table 11.

**Table 11**

| A node | T node | Association role |
|---|---|---|
| Authorship of Hamlet | Shakespeare | Author |
| Authorship of Hamlet | Hamlet | Work |
| Authorship of Hamlet | About 1600 | Creation era |
| Authorship of Hamlet | United Kingdom | Creation country |

Accordingly, when a data set composed of four data having one common association is expressed in binary relation, six data sets are necessary because of 4C2 = 6. However, it can be understood that only four data sets are necessary according to the present invention.

In other words, for the data set having four elements, when the data is stored in the database, one new node (A node) common in the data set is added, an association role is then defined for each element, and an "A node", a "T node" and an "association role" are defined as one set of data. Thus, the data structure of the present invention can be constructed.

Here, an identifier "A1" is assigned to the A node "authorship of Hamlet". It can be understood that the data having common identifiers "A1" belongs to one group.

Additionally, identifiers "T11" to "T14" are assigned to four T nodes "Shakespeare", "Hamlet", "about 1600" and "United Kingdom", respectively.

Thus, an AR table created from the first example is as shown in Table 12.

**Table 12**

| A node | T node | Association role |
|---|---|---|
| A1 | T11 | Author |
| A1 | T12 | Work |
| A1 | T13 | Creation era |
| A1 | T14 | Creation country |

A node type of the A node (identifier A1) indicating "authorship of Hamlet" is set as "authorship-related information", and node types of the T nodes to which the identifiers T11 to T14 have been assigned are set as "playwright", "drama", "era" and "country". Accordingly, an ID table is created as represented by Table 13.

**Table 13**

| A1 | Authorship-related information | (null) |
|---|---|---|
| T11 | Playwright | Shakespeare |
| T12 | Drama | Hamlet |
| T13 | Era | About 1600 |
| T14 | Country | United Kingdom |

As second data, a statement that "Japanese translation with drama Hamlet as original work was published by oo Publishing Company in February 2003" will be taken as an example.

The data is structured as follows according to the present invention. Here, an A node common among a series of data elements is "Japanese translation of Hamlet", and an identifier "A2" is assigned thereto. A result is as shown in Table 14.

**Table 14**

| A node | T node | Association role |
|---|---|---|
| A2 | Hamlet | Original work |
| A2 | Hamlet | Translation |
| A2 | February 2003 | Publication date |
| A2 | o o Publishing Company | Publication |

An identifier "T12" has been assigned to Hamlet which is an original work. Thus, when an identifier "T22" is assigned to the translation Hamlet, and identifiers "T23" and "T24" are assigned to the publication date and the publisher, an AR table for the second data is as shown in Table 15.

**Table 15**

| A node | T node | Association role |
|---|---|---|
| A2 | T12 | Original work |
| A2 | T22 | Translation |
| A2 | T23 | Publication date |
| A2 | T24 | Publication |

Additionally, an ID table is created as represented by Table 16.

**Table 16**

| Node ID | Node Type | Node Name |
|---|---|---|
| A2 | Authorship-related information | (null) |
| T22 | Drama | Hamlet |
| T23 | Date | February 2003 |
| T24 | Publisher | o o Publishing Company |

The first and second data, and other such data is stored in the same database. Thus, an AR table and an ID table similar to Tables 17 and 18 are obtained in the end.

**Table 17**

| A node | T node | Association role |
|---|---|---|
| A1 | T11 | Author |
| A1 | T12 | Work |
| A1 | T13 | Creation era |
| A1 | T14 | Creation country |
| A2 | T12 | Original work |
| A2 | T22 | Translation |
| A2 | T23 | Publication date |
| A2 | T24 | Publication |
| : | : | : |

**Table 18**

| Node ID | Node type | Node name |
|---|---|---|
| A1 | Authorship-related information | (null) |
| T11 | Playwright | Shakespeare |
| T12 | Drama | Hamlet |
| T13 | Era | About 1600 |
| T14 | Country | United Kingdom |
| A2 | Authorship-related information | (null) |
| T22 | Drama | Hamlet |
| T23 | Date | February 2003 |
| T24 | Publisher | o o Publishing Company |
| : | : | : |

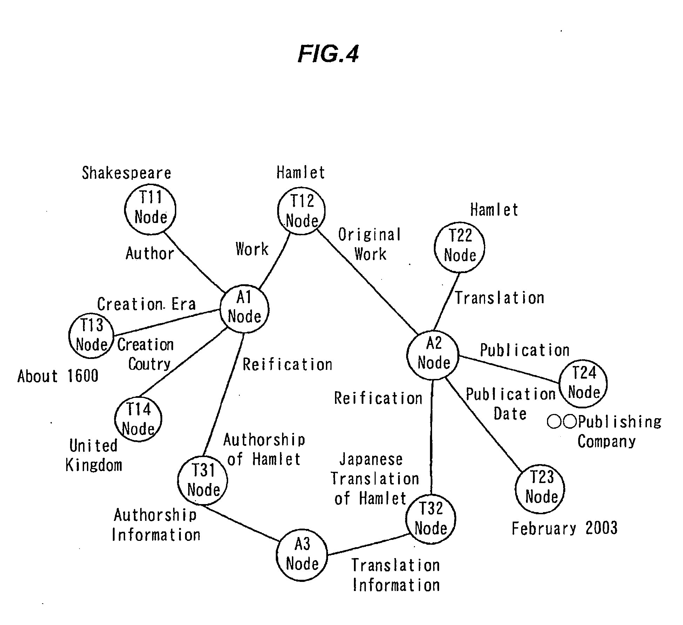

Furthermore, as shown in FIG. 4, T nodes are provided to describe specific meanings of associations indicated by A nodes whose identifiers are A1 and A2. Identifiers "T31" and "T32" are assigned to the T nodes, and the T nodes are associated with the nodes A1 and A2 through association roles "reification".

Node types of these two new T nodes are set as "authorship information", and node names are set as "authorship of Hamlet" and "Japanese translation of Hamlet", respectively.

An A node indicating an association between the nodes T31 and T32 is newly added with an identifier A3, and a node type is set as "original work-translation information".

Roles of the nodes T31 and T32 in the association are "original work information" and "translation information". Through the aforementioned processing, an AR table and an ID table are added as represented by Tables 19 and 20, respectively.

**Table 19**

| A node | T node | Association role |
|---|---|---|
| A1 | T31 | Reification |
| A2 | T32 | Reification |
| A3 | T31 | Original work information |
| A3 | T32 | Translation information |

**Table 20**

| Node ID | Node type | Node name |
|---|---|---|
| T31 | Authorship information | Authorship of Hamlet |
| T32 | Authorship information | Japanese translation of Hamlet |
| A3 | Original work-Translation information | (null) |

To directly store the first and second data in the relational database, an item (data attribute) corresponding to "Hamlet" as a translation version or "oo Publishing Company" must be newly added as a data item name. This addition is not easy because the table structure of the database is changed.

According to the present invention, by adding a line for the existing AR table as shown in the example, it is possible to store data having different data attributes as a plurality of groups.

The first data and the second data are as shown in FIG. 4 when they are expressed by using A nodes, T nodes and edges representing associations between the nodes.

The present invention provides a method of easily representing data having such a complex structure and a storage/management method with respect to the relational database.

Next, a case of searching for desired data in the database of the present invention will be described.

Hereinafter, description will be made by taking as an example a case in which a user "wishes to know publisher of Japanese translation of drama Hamlet written by playwright Shakespeare".

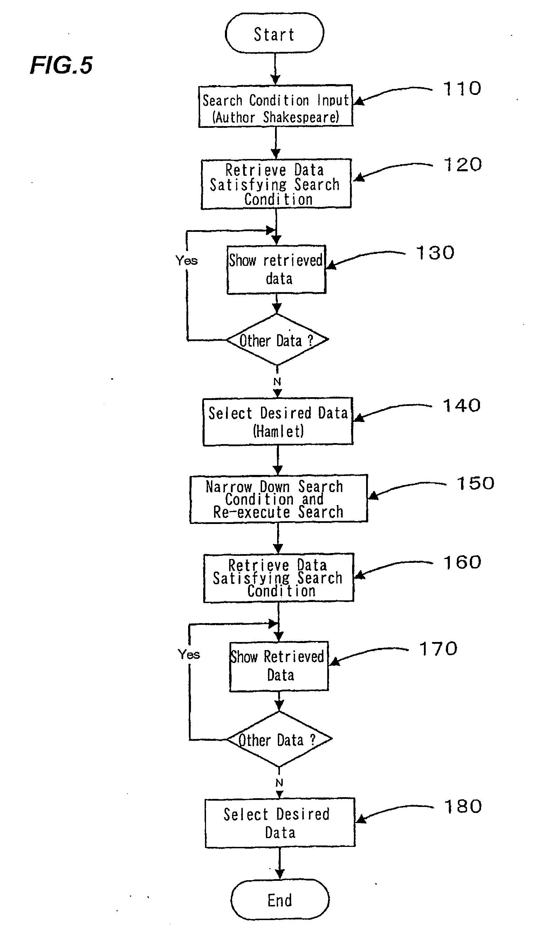

FIG. 5 is a flowchart showing the process. The flowchart of FIG. 5 will be described hereinafter.

110: The user inputs search conditions as "drama" written by "playwright", "Shakespeare".

120: Plural groups of data satisfying the search conditions are retrieved.

130: Data corresponding to "drama" is sequentially displayed from the detected plural groups of data.

140: The user selects a desired drama name, i.e., "Hamlet", from the data.

150: Data is searched for with "Hamlet" and "translation" as new search conditions.

160: Plural groups of data satisfying the search conditions are retrieved.

170: Data regarding "publisher" and data regarding "publication date" are sequentially displayed from the detected plural groups of data.

180: The user selects a desired publisher.

Detailed description will be given below.

The user inputs a node name "Shakespeare" of a T node and an association role "author" as search conditions, and searches for data.

An identifier of the T node whose association role is "author" is detected by referring to the AR table in the database. Subsequently, plural groups of identifiers of A nodes corresponding to the T node whose node name is "Shakespeare" are detected by referring to node name attributes stored in the ID table.

From the data having the detected plural groups of A node identifiers, another search condition, i.e., a T node identifier whose association role is "work" is selected from the AR table.

Data regarding the drama corresponding to the work is sequentially displayed from the ID table based on the identifier.

That is, drama names "Hamlet", "Taming of the Shrew", "Merchant of Venice", "Midsummer Night's Dream", "King Lear" and the like are sequentially displayed. The user selects a desired drama name, i.e., "Hamlet".

Subsequently, using the identifier "T12" of the selected "Hamlet" as a key, the user searches for an A node identifier containing an identifier of "Hamlet" in a T node ID and having an association role "translation" from the AR table.

Accordingly, plural groups of data associated by A node identifiers satisfying the search conditions are detected.

Node names of T nodes having "publication" and "publication date" as association roles are sequentially displayed from the detected plural groups of data by referring to the ID table.

The user can select a desired publisher therefrom, i.e., "o o Publishing Company" which has published a translation of the drama Hamlet recently in "February 2003".

The example of FIG. 5 has been described as one search example.

Needless to say, when the number of search conditions increases, the number of searching times in the database is not limited to two shown in FIG. 5, but repeated by an arbitrary number of times in accordance with desired conditions.

In the described specific example, a single attribute is assigned as an association role. However, the association role is not limited to the single attribute.

In other words, an association role can have a plurality of attributes. In the example, more detailed association roles can be defined by adding and specifying genres of "tragic drama", "comedy", "romance", "historical drama" and the like to the association role "drama".

### [Features of Data Storage Method/Data Structure of the present invention]

As described above, according to the data storage method and the data structure of the present invention, by using the table forms of the relational database widely used at present, the data can be stored and managed while maintaining the hypergraph structure representing a relation of a series of data having tertiary or more relations, generally n-ary mutual relations.

According to the method of directly mapping the associative network data in the table of the relational database, it is possible to solve the problem that it is impossible to efficiently store/manage the data indicating tertiary or more relations, generally n-ary relations.

It is also possible to solve the problem that changing such as addition of attribute data to the data stored in the database necessitates changing of the design of the relational database table, causing a loss of flexibility and requiring much labor.

Furthermore, it is possible to describe a meaning having a series of associations by using the identifiers assigned to the data and the association roles in the framework of the same database schema.

### [Database Server]

Hereinafter, a database server of the present invention will be described.

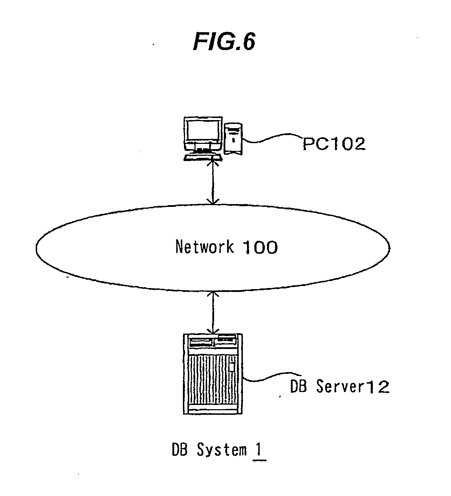

FIG. 6 shows a configuration of a database system (DB system) 1 of the present invention.

Referring to FIG. 6, the first DB system 1 of the present invention is configured by connecting a database server (DB server) 12 to a computer (PC) 102 used for inputting and searching for data via a network 100 such as LAN, WAN or Internet when necessary.

In the description below, terms may be partially different from those of the data storage method and the data structure of the present invention described above with reference to FIGS. 4 and 5 and Tables 7 to 20. However, corresponding terms between the descriptions are substantially identical.

In the description of the DB system 1, terms below will take precedence over the terms of the data storage method and the data structure of the present invention described above.

### [Hardware Configuration]

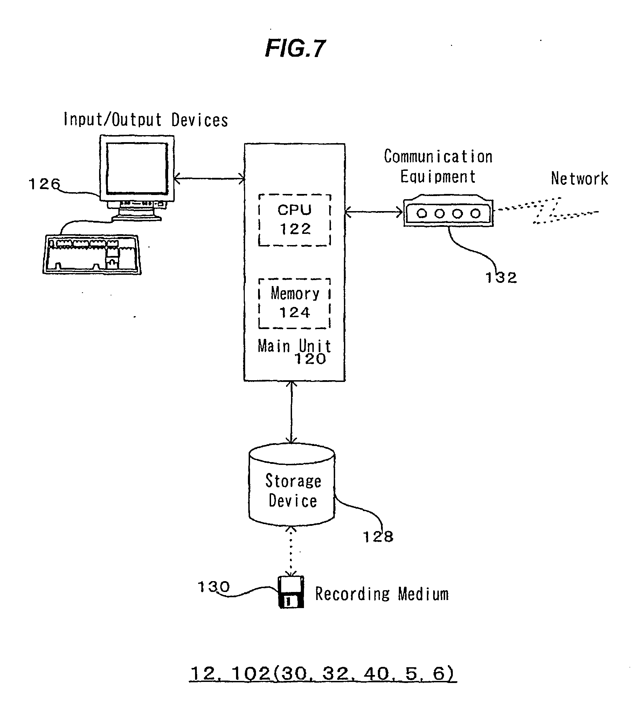

FIG. 7 shows a hardware configuration of the DB server 12 and the PC 102 shown in FIG. 6.

Referring to FIG. 7, the DB server 12 and the PC 102 include a main unit 120 including a CPU 122, a memory 124, and peripheral circuits therefor, input/output devices 126 including a display unit, a keyboard and the like, and a recording device 128 such as a CD or an HDD.

Further, when the DB server 12 and the PC 102 (components for performing communication may be generically referred to as communication node, hereinafter) are connected to the network 100, a communication device 132 for performing communication with the other communication node via the network 100 may be added.

In other words, the DB server 12 and the PC 102 include components as computers provided with functions of performing communication with the other communication node.

### [Data Structure]

In the DB server 12, data storage and searching for stored data to which the data storage method and the data structure of the present invention (FIGS. 4 and 5, and Tables 7 to 20) are applied are performed.

First, prior to detailed explanation of the DB server 12 of the present invention, to promote a better understanding of it, the data structure and the data search in the DB server 12 will be described.

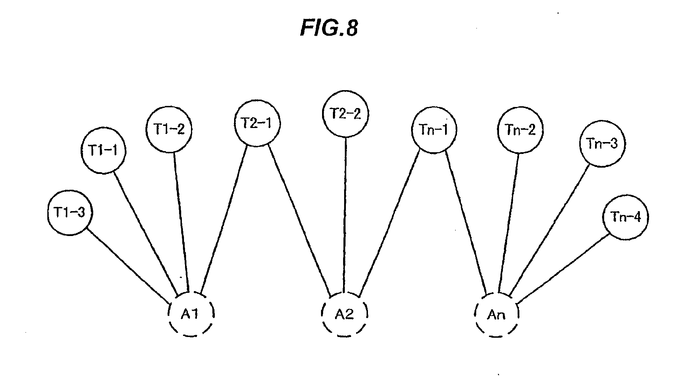

FIG. 8 shows the data associations of FIG. 3(a) in a rewritten form.

Referring to FIG. 8, in the DB server 12, as in the case of the data storage method and the data structure of the present invention, a topic node (T node, hereinafter) is associated with one or more association nodes (A nodes, hereinafter), and an association attribute R is defined between the associated T and A nodes.

The association attribute R may be any attribute for defining an association between the T and A nodes. However, for specific and clear description below, a case in which the association attribute R is an association role R will be taken as a specific example as in the aforementioned description of the data storage method and the data structure of the present invention.

The data associations shown in FIG. 3(a) can be rewritten as shown in FIG. 8.

Among A nodes A1 to An shown in FIG. 8, the A node A1 and T nodes T1-1 to T1-3, and T2-1 associated with the A node A1 are interconnected by edges.

Similarly, T nodes T2-1, T2-2 and Tn-1 associated with the A node A2, and the A node A2 are interconnected by edges.

The same holds true for the A node An. T nodes Tn-1 to Tn-4 associated with the A node An, and the A node An are interconnected by edges.

In other words, FIG. 8 shows that the T node T2-1 has associations with both of the A nodes A1 and A2, and the T node Tn-1 has associations with both of the A nodes A2 and An.

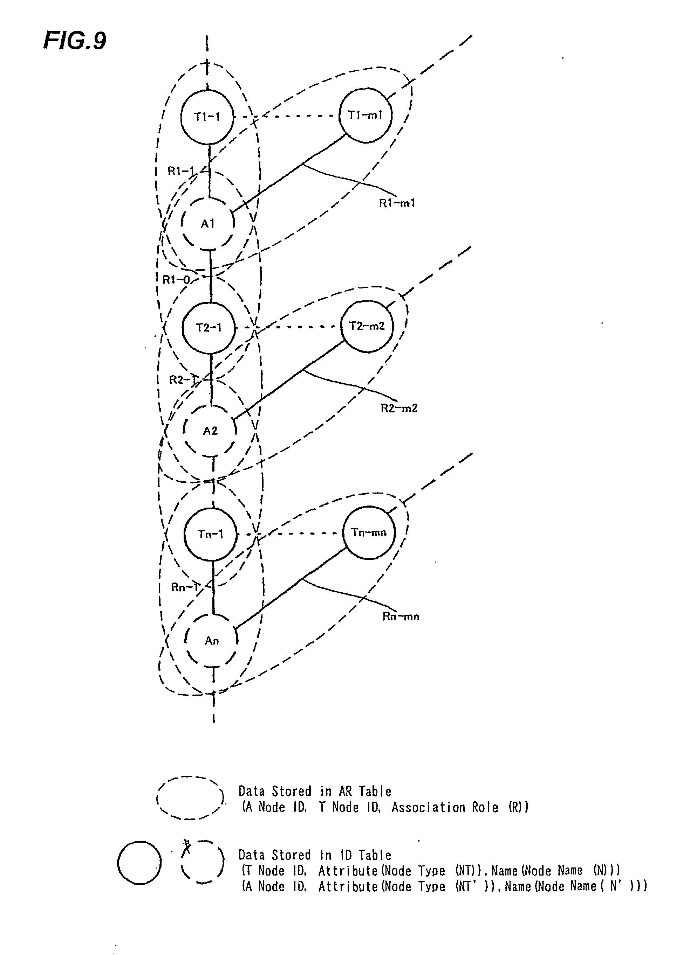

FIG. 9 shows the data structure of FIG. 8 in a generalized form.

In FIG. 8, the edges are traced from the T node T1-1 through the A node A1, the T node T2-1, the A node A2 and the T node Tn-1 to the A node An, thereby obtaining a path extended in a top-to-bottom direction shown in FIG. 9.

FIG. 9 shows the following case as a specific example.
(1) The T nodes T1-1 to T1-m1 and T2-1 are associated with the A node A1, and association roles R1-1 to R1-m1 and R1-0 are defined in associations (edges) between the T nodes T1-1 to T1-m1 and T2-1 and the A node A1.
(2) The T nodes T2-1 to T2-m2 and the T node omitted in FIG. 9 are associated with the A node A2, and association roles R2-1 to R2-m2 are defined in associations between the T nodes T2-1 to T2-m2 and A node A2.
(3) Similarly thereafter, the T node omitted in FIG. 9 is associated with the A node, and an association role R is defined therebetween.
(4) The T nodes Tn-1 to Tn-mn and the T node omitted in FIG. 9 are associated with the A node An, and association roles Rn-1 to Rn-mn (m1 to mn, and n is an integer) are defined in associations between the T nodes Tn-1 to Tn-mn and the A node An.

In other words, in the DB server 12, the T nodes are associated with one or more A nodes, and the A nodes are associated with one or more T nodes, whereby the plurality of T nodes can be associated with one another via the A nodes and the plurality of A nodes can be associated with one another via the T nodes.

In the DB server 12, a plurality of combinations of the A and T nodes associated as shown in FIG. 9 can be stored.

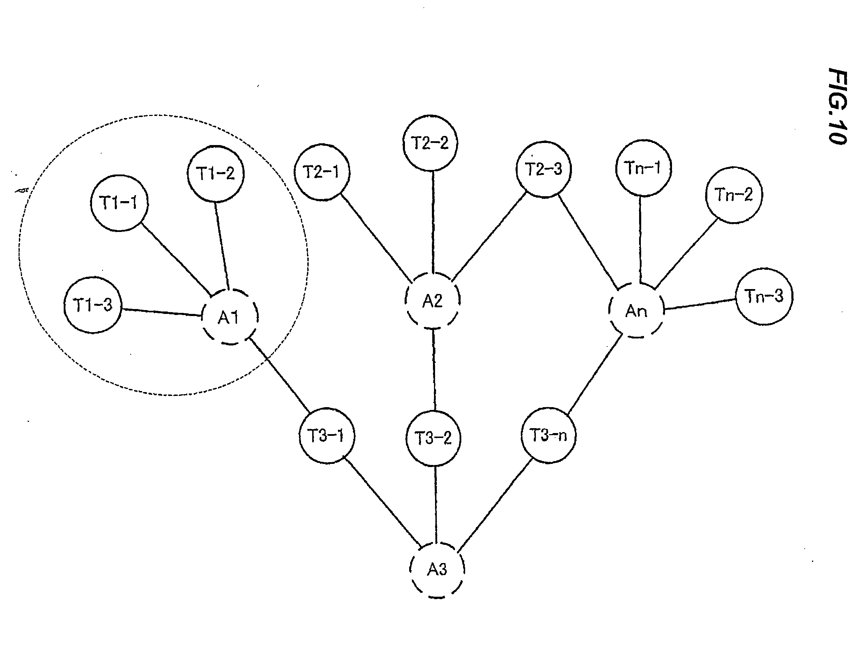

FIG. 10 is a diagram showing the data associations of FIGS. 3(b) and 4 in a generalized form.

The data associations shown in FIGS. 3(b) and 4 can be represented in a generalized form as shown in FIG. 10.

Referring to FIG. 10, the T nodes T1-1 to T1-3 (, and T3-1) associated with the A node A1 are connected to the A node A1 by edges, the T nodes T2-1 to T2-3 (, and T3-2) associated with the A node A2 are connected to the A node A2 by edges, and the A node An and the T nodes Tn-1 to Tn-3, and T2-3 (, and T3-n) are connected together by edges.

The T node T2-3 is connected to both of the A nodes A2 and An by edges, which means that the T node T2-3 is associated with both of the A nodes A2 and An.

Here, when a series of information associated by the A nodes A1, A2 and An have a common association, a new association node A3 can be defined.

For example, when the A node A1 is information regarding the original work of Hamlet, the A node A2 is information regarding the translation of Hamlet, and the A node An is information regarding the performance of Hamlet, associative data represented by the A nodes A1, A2 and An have a commonality as data regarding Hamlet.

Thus, to indicate that the data associated by the A nodes A1, A2 and An have the commonality, the new association node A3 is defined and stored in the database.

As shown in a broken line of FIG. 10, to specifically describe the series of information represented by the A node A1 and the T nodes T1-1 to T1-3, a new T node T3-1 is defined and stored in the database.

Similarly, to describe the associations of the A nodes A2 and An specifically, new T nodes T3-2 and T3-n are defined and stored in the database.

For example, data "authorship of Hamlet" is defined as topic contents in the T node T3-1, data "Japanese translation of Hamlet" is defined as topic contents in the T node T3-2, and data "performance of Hamlet" is defined as topic contents in the T node T3-n. The data is stored in the database.

Additionally, an association role R is defined between the new A node A3 and each of the T nodes T3-1 to T3-n, and stored in the database.

For example, "original work information" is defined as an association role R between the new A node A3 and the T node T3-1, "translation information" is defined as an association role R between the new A node A3 and the T node T3-2, and "performance information" is defined as an association role R between the new A node A3 and the T node T3-n. The data is stored in the database.

Similarly, for example, association roles R predefined as "reification" by the system are defined between the A nodes A1, A2 and An and the T nodes T3-1, T3-2 and T3-n.

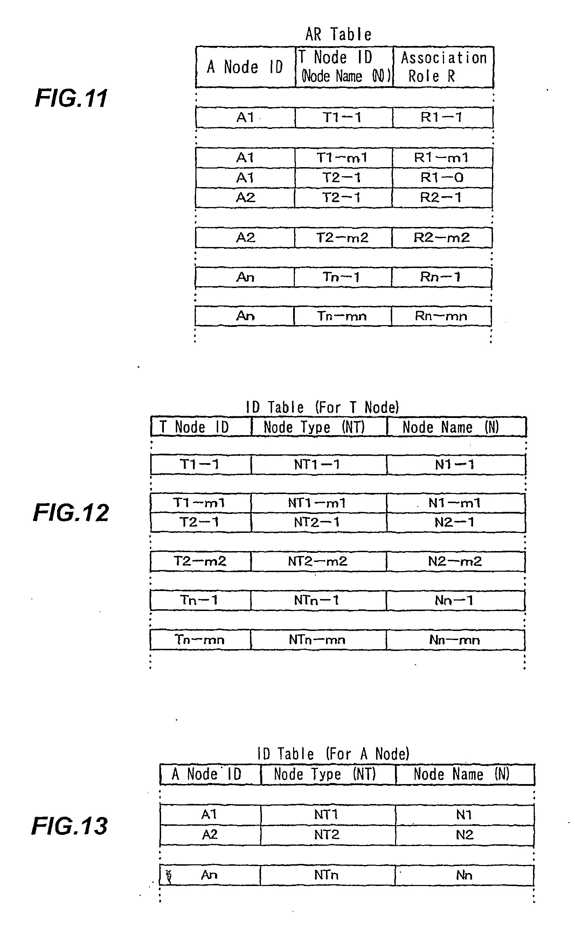

FIG. 11 shows an association role (AR) table used for storing the data of the structure shown in FIG. 9.

FIG. 12 shows a T node identifier (ID) table used for storing the data of the structure shown in FIG. 9.

FIG. 13 shows an A node identifier (ID) table used for storing the data of the structure shown in FIG. 9.

In the DB server 12, the data of the A and T nodes associated by the structure shown in FIG. 9 and the data of the T node are stored by using the AR table (first database) of FIG. 11 and the ID table (second database) of FIG. 12.

Entries of the AR table shown in FIG. 11 represent one given A node, one T node associated with the A node, and an association role R defined between the associated A and T nodes, and include an identifier (ID) of the A node, an identifier of the T node associated with the A node, and an association role (R) defined between the associated A and T nodes.

In other words, the entries of the AR table include the identifier of the A node at one end of one of the edges shown in FIG. 9, the identifier of the T node at the other end of the edge, and the association role defined for the edge.

Such entries are created for all the edges (edges between the T node T1-1 and the A node A1 and between the T node Tn-mn and the A node An) shown in FIG. 9, and stored in the AR table. Accordingly, the association between the A and T nodes shown in FIG. 9 is stored in the AR table (first database) of FIG. 11.

Each T node has contents (name of the T node, data of the T node itself, data referred to by the T node, and the like). Further, for each T node, in addition to the identifier (ID) stored in each entry of the AR table, an attribute of the T node (node type (NT); topic attribute) is defined (hereinafter, case in which the T node has only its name (node name (N)) as its contents will be taken as a specific example).

Entries of the T node ID table shown in FIG. 12 include an identifier (ID) of one of the T nodes shown in FIG. 9, an attribute (node type (NT)) defined for the T node, and a name (node name (N)) of the T node.

Such entries are created for all the T nodes T1-1 to Tn-mn shown in FIG. 9, and stored in the T node ID table. Accordingly, the data of all the T nodes shown in FIG. 9 is stored.

Entries of the A node ID table shown in FIG. 13 include an identifier (ID) of one of the A nodes shown in FIG. 9, an attribute (node type (NT')) defined for the A node, and a name (node name (N')) of the A node.

Such entries are created for all the A nodes A1 to An shown in FIG. 9, and stored in the A node ID table. Accordingly, the data of all the A nodes shown in FIG. 9 is stored.

It is to be noted that similar forms can be employed to store the association between the A and T nodes and the data of the A and T nodes shown in FIG. 9 in addition to the table forms. In the description below, however, a case of using the AR table and the ID table will be taken as a specific example.

Depending on use, configuration or processing task of the DB server 12, as shown in FIG. 11, each entry may include contents (node name (N)) of the T node in place of the identifier (ID) of the T node in the AR table.

Similarly, in the AR table, each entry may further include contents of the T node.

### [Data Search]

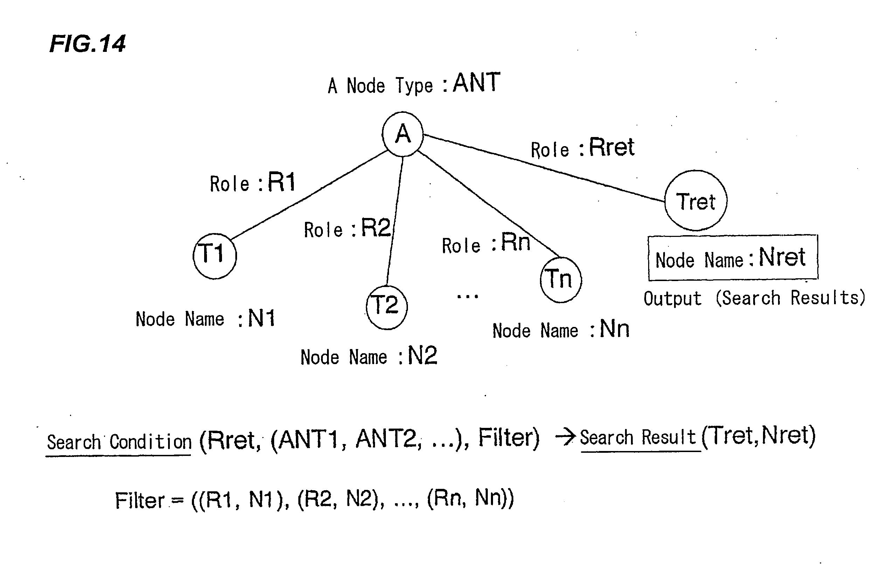

FIG. 14 shows a data search method in the DB server 12 shown in FIGS. 6 and 7.

Here, as shown in FIG. 14, a specific example will be taken in which T nodes T1 to Tn and a T node Tret (T return) to be a search result (output) are associated with a certain A node, association roles R1 to Rn and Rret are defined between the A node and the T nodes T1 to Tn and Treat, and the T nodes T1 to Tn and Tret have node names N1 to Nn and Nret.

In the DB server 12, one or more combinations of the association role Rret defined for the T node to be obtained as a search result(second condition data), an attribute of the A node used for searching (node type NT; ANT1 and ANT2 in FIG. 14), the association role R and the node name N of the T node used for the searching (first condition data) are used as search conditions.

As shown in FIG. 14, for example, the search conditions are represented by (Rret, (ANT1, ANT2, ...), Filter), Filter = ((R1, N1), (R2, N2), ..., (Rn, Nn).

The search conditions can further contain an attribute NT of the T node (third condition data) as described later.

Among the search conditions, one or more combinations (R1, N1), (R2, N2), ... (Rn, Nn) of the association role R and the node name N of the T node included in the Filter are used as filters for searching, and thus will be referred to as search filters hereinafter.

Among the search conditions, the attributes of the A node (ANT1, ANT2, ...) can be omitted.

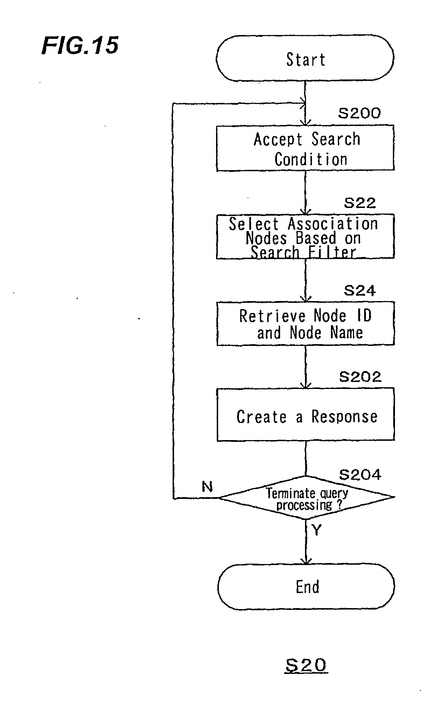

FIG. 15 is a flowchart showing an overall process (S20) of the searching in the DB server 12 shown in FIGS. 6 and 7.

Referring to FIG. 15, in a step 200 (S200), for example, the DB server 12 accepts the search conditions shown in FIG. 14 according to searcher's operation of the input/output device 126 of the PC 102 (FIG. 6) or the DB server 12.

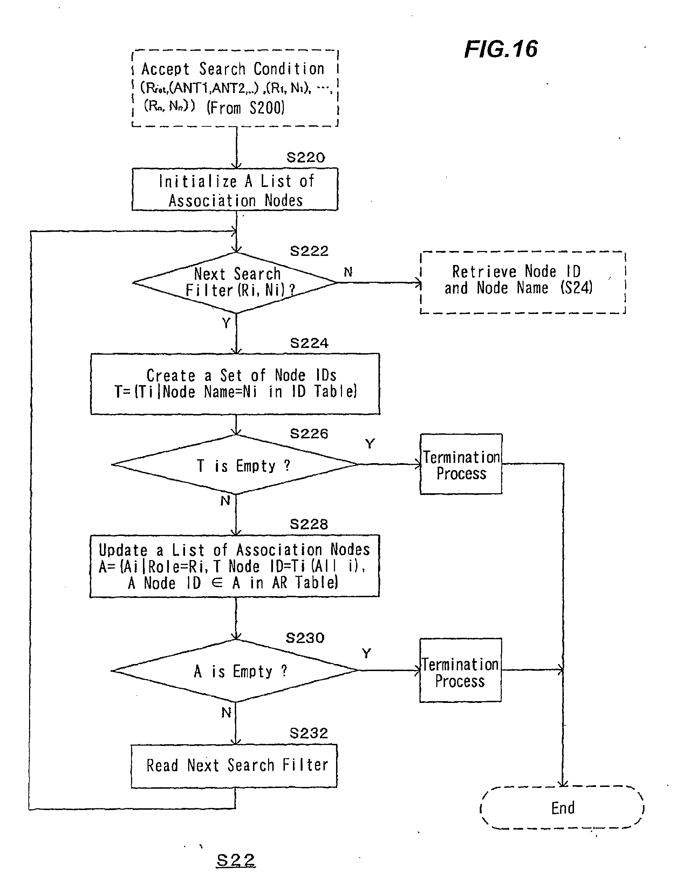

In a step 22 (S22), referring to FIG. 16, an association node is selected based on a search filter described later.

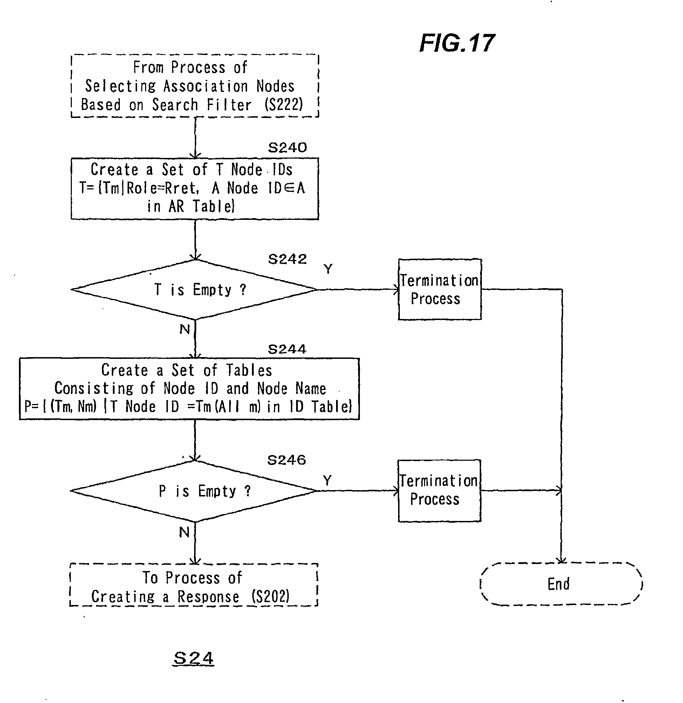

In a step 24 (S24), referring to FIG. 17, a node ID and a node name described later are obtained.

In a step 202 (S202), the DB server 12 creates a response to the searcher based on an identifier (node ID) and the node name (Nret) of the T node Tret obtained as a search result through the processing in S24.

For the response, only the node name Nret, various data referred to by the node Tret, or various data such as data indicating the node Tret itself can be used.

In a step 204 (S204), the DB server 12 determines whether searcher's query has been terminated or not.

The DB server 12 ends the process when the searcher's query has been terminated, or returns to the processing in S200 otherwise.

FIG. 16 is a flowchart showing an association node selection process (S22) based on the search filter shown in FIG. 15.

Referring to FIG. 16, upon the acceptance of the search conditions (Rret, (ANT1, ANT2, ...), Filter), Filter = ((R1, N1), (R2, N2), ..., (Rn, Nn)) in the processing in S200 shown in FIG. 15, the DB server 12 initializes a list of association nodes used for processing in a step 220 (S220).

In this association node list, among the A nodes obtained from the AR table (FIG. 11), an identifier of an A node containing one of the attributes of the A nodes (node type; ANT1, ANT2, ...) in the search conditions as its attribute (node type NT) is stored.

It is to be noted that when the attributes of the A nodes are omitted from the search conditions ((ANT1, ANT2, ...) = null), in the processing in S220, all the identifiers of the A nodes obtained from the AR table (FIG. 11) are stored.

In a step 222 (S222), the DB server 12 determines whether processing has been carried out or not for all the search filters (Ri, Ni).

The DB server 12 proceeds to processing in S24 (FIGS. 15 and 17) if the processing has been carried out for all the search filters. Otherwise, the DB server 12 sets any one of the search filters (Ri, Ni) not yet processed as a next filter for processing, and proceeds to processing in S224.

In a step 224 (S224), the DB server 12 searches the T node ID table (FIG. 12) to retrieve all entries containing the node names Ni of the search filters (Ri, Ni), and creates a set of T node identifiers contained in the retrieved entries (node ID set T, where T = {Ti| node name = Ni in ID table}).

It is to be noted that when the search conditions contain attributes of T nodes (node type; NT) and the search filters are represented by (Ri, Ni, NTi), in the processing in S224, the DB server 12 only needs to retrieve entries containing the node names Ni and the node types NTi of the search filters (Ri, Ni, NTi) from the ID table, and to create a set of T node identifiers contained in the retrieved entries as a node ID set T.

In a step 226 (S226), the DB server 12 determines whether the node ID set T obtained in the processing in S224 is empty or not.

When the node ID set T is empty, the DB server 12 performs processing for terminating the search process (display a failure of searching to the searcher or the like), and ends the search process. Otherwise, the DB server 12 proceeds to processing in S228.

In a step 228 (S228), the DB server 12 searches the AR table (FIG. 11) to update the association node list A.

That is, the DB server 12 retrieves all the entries containing the association roles Ri of the search filters (Ri, Ni) and the T node identifiers included in the node ID set T obtained in the processing in S224 from the AR table, and stores the A node identifiers contained in the retrieved entries in the association node list A (A = {Aj| role = Ri, T node identifier = Ti (all i), A node identifier ∈ A in AR table}).

In a step 230 (S230), the DB server 12 determines whether the association node list A obtained in the processing in S228 is empty or not.

When the association node list A is empty, the DB server 12 performs processing for terminating the search process, and ends the search process. Otherwise, the DB server 12 proceeds to processing in S232.

In a step 232 (S232), the DB server 12 reads the search filter included in the search conditions but not processed and returns to the processing in S222.

FIG. 17 is a flowchart showing a node ID and node name obtaining process (S24) shown in FIGS. 15 and 16.

Referring to FIG. 17, upon the completion of the association node selection process (S22) based on the search filters, in a step 240 (S240), the DB server 12 searches the AR table (FIG. 11) to create a T node ID set T.

That is, the DB server 12 retrieves all the entries containing the association roles Rret included in the search conditions and A node identifiers included in the association node list A obtained in the processing in S22 (S228) from the AR table, and creates a set of T node identifiers (T node ID set T) contained in the retrieved entries (T = {Tm| role = Rret, A node identifier ∈ A in AR table}).

In a step 242 (S242), the DB server 12 determines whether the T node ID set T obtained in the processing in S240 is empty or not.

When the T node ID set T is empty, the DB server 12 performs termination processing to end the search process. Otherwise, the DB server 12 proceeds to S244.

In a step 244 (S244), the DB server 12 searches the T node ID table (FIG. 12) to create a node ID and node name set P.

That is, the DB server 12 retrieves from the ID table all the entries containing any of the T node identifiers Tm contained in the T node ID set T created in the processing in S240, and creates a set P of node names Nm and T node identifiers Tm contained in the entries (P = {(Tm, Nm)| T node identifier = Tm (all m) in ID table}).

In a step 246 (S246), the DB server 12 determines whether the set P of the T node identifiers and the T node names obtained in the processing in S244 is empty or not.

The DB server 12 performs termination processing to end the search process when the set P of the T node identifiers and the T node names is empty. Otherwise, the DB server 12 proceeds to processing in S202.

This set P is used for creating the response to the searcher in the processing in S202 shown in FIG. 15.

### [DB Program 2]

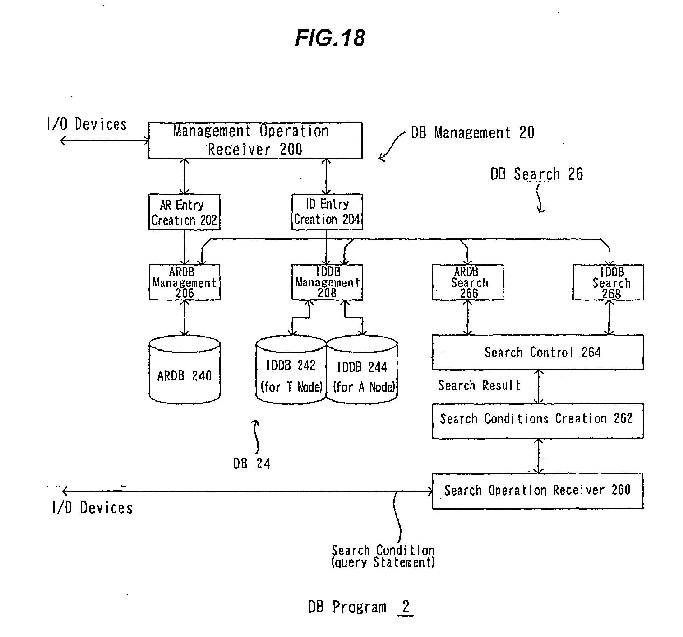

FIG. 18 shows a structure of a DB program 2 executed in the DB server 12 shown in FIGS. 6 and 7.

In FIG. 18, for clear illustration purposes, a line showing a data flow is omitted if not required.

Referring to FIG. 18, the DB program 2 includes a DB management unit 20, a DB unit 24 and a DB search unit 26.

The DB management unit 20 includes a management operation receiver 200, an AR entry creation unit 202, an ID entry creation unit 204, an AR database management unit (ARDB management unit) 206, and an ID database management unit (IDDB management unit) 208.

The DB unit 24 includes an AR database (ARDB) 240, a T node ID database (IDDB) 242, and an A node IDDB 244.

The DB search unit 26 includes a search operation receiver 260, a search condition creation unit 262, a search control unit 264, an AR database search unit (ARDB search unit) 266, and an ID database search unit (IDDB search unit) 268.

For example, the DB program 2 is supplied through the recording medium 130 (FIG. 7) to the DB server 12, loaded into the memory 124, and executed.

With these components, the DB program 2 is used to create an AR database (FIG. 11) and an ID database (FIGS. 12 and 13) described above with reference to FIGS. 9 to 17, and perform data search using the databases (FIGS. 14 to 17).

In the DB unit 24, the ARDB 240 stores the AR table shown in FIG. 11.

The IDDB 242 stores the T node ID table shown in FIG. 12.

The IDDB 244 stores the A node ID table shown in FIG. 13.

FIG. 18 shows a specific example in which the T node ID table and the A node ID table shown in FIGS. 12 and 13 are stored in the IDDBs 242 and 244. However, the T node ID table and the A node ID table may be stored in the same database.

The T node ID table and the A node ID table do not need to be always created separately, but they may be integrally created in one database.

In the DB management unit 20, the management operation receiver 200 receives an operation of managing or modifying data stored in the AR table and the ID table from the input/output device 126 (FIG. 7) or from the PC 102 (FIG. 6) through the network 100, and outputs the operation to the ARDB management unit 206 and the IDDB management unit 208.

The management operation receiver 200 receives user's operation for designating an A node and a T node, an association between the A node and the T node, an association role R defined between the A node and the T node (edges), identifies (ID) assigned to the A node and the T node, a node name (N) assigned to the T node, and an attribute (FIG. 9) defined for the T node, and outputs the operation to the AR entry creation unit 202 and the ID entry creation unit 204.

For example, the management operation receiver 200 displays a user interface (UI) image representing the A node and the T node, an association therebetween as shown in FIG. 14 in the input/output device 126, receives user's operation on the UI image, and accepts the designations.

The AR entry creation unit 202 creates entries of the AR table shown in FIG. 11 according to user's designations input from the management operation receiver 200, and outputs the entries to the ARDB management unit 206.

The ARDB management unit 206 adds the entries of the AR table input from the AR entry creation unit 202 to the AR table stored in the ARDB 240.

The ARDB management unit 206 modifies contents of the AR table stored in the ARDB 240 according to user's operation input from the management operation receiver 200.

The ARDB management unit 206 retrieves the entries of the AR table stored in the ARDB 240 according to search requests by the ARDB search unit 266, and outputs the entries to the ARDB search unit 266.

The ID entry creation unit 204 creates entries for the T node and A node ID tables shown in FIGS. 12 and 13 according to searcher's designation input from the management operation receiver 200, and outputs the entries to the IDDB management unit 208.

The IDDB management unit 208 adds the entries of the T node ID table input from the ID entry creation unit 204 to the T node ID table stored in the IDDB 242.

The IDDB management unit 208 adds the entries of the A node ID table input from the ID entry creation unit 204 to the A node ID table stored in the IDDB 244.

The IDDB management unit 208 modifies contents of the ID table stored in the IDDBs 242 and 244 according to user's operation input from the management operation receiver 200.

The IDDB management unit 208 retrieves the entries of the ID table stored in the IDDBs 242 and 244 according to search requests by the IDDB search unit 268, and outputs the entries to the IDDB search unit 268.

In the DB search unit 26, the search operation receiver 260 receives searcher's operation for designating search conditions (FIG. 14, attribute of an optional T node (node type (NT)) may be further contained) used for the search process shown in FIGS. 14 to 17 from the input/output device 126 (FIG. 7) or from the PC 102 (FIG. 6) through the network 100.

The search operation receiver 260 outputs the received operation to the search condition creation unit 262.

For example, when the search operation receiver 260 accepts search conditions in a form of a natural language query, the search condition creation unit 262 parses the query statement to take out words.

Next, the search condition creation unit 262 searches the AR table and the ID table stored in the ARDB 240 and the IDDBs 242 and 244 through the ARDB search unit 266, the IDDB search unit 268, the ARDB management unit 206 and the IDDB management unit 208, and extracts words used as search conditions.

Further, the search condition creation unit 262 combines the extracted words according to the structure of the query sentence, retrieves the search conditions in the form of (Rret, (ANT1, ANT2, ...), ((R1, N1), (R2, N2), ..., (Rn, Nn)) shown in FIG. 14, and outputs the search conditions to the search control unit 264.

It is to be noted that when the searcher directly designates the search conditions in the form of (Rret, (ANT1, ANT2, ...), ((R1, N1)), (R2, N2), ..., (Rn, Nn))) shown in FIG. 14, the search condition creation unit 262 may be omitted.

The search condition creation unit 262 may be a tool for assisting retrieval of the search conditions (Rret, (ANT1, ANT2, ...), ((R1, N1), (R2, N2), ..., (Rn, Nn))) by the searcher.

The search control unit 264 controls the ARDB search unit 266 and the IDDB search unit 268 according to the search conditions (Rret, (ANT1, ANT2, ...), ((R1, N1), (R2, N2), ..., (Rn, Nn))) input from the search condition creation unit 262 (search operation receiver 260) to perform searching in the ARDB 240 (AR table; FIG. 11) and the IDDBs 242, 244 (ID table; FIGS. 12 and 13) through the ARDB management unit 206 and the IDDB search unit 208 as shown in FIGS. 15 to 17.

When a search result (set P; FIG. 17) is obtained by the searching based on the search conditions, the search control unit 264 creates a response based on the search result, displays the response in the input/output device 126 (FIG. 7), or displays the response in the input/output device 126 of the PC 102 through the network 100 (FIG. 6) to the searcher.

The ARDB search unit 266 searches the ARDB 240 (AR table; FIG. 11) through the ARDB management unit 206 under the control of the search control unit 264, and returns the search result to the search control unit 264.

The IDDB search unit 268 searches the IDDBs 242 and 244 (ID tables; FIGS. 12 and 13) through the IDDB management unit 208 under the control of the search control unit 264, and returns the search result to the search control unit 264.

### [Overall Operation]

Hereinafter, an overall operation of the DB server 12 (DB program 2; FIG. 18) shown in FIGS. 6 and 7 will be described by taking specific examples.

### [Creation of AR Table and ID Table]

First, a process of creating an AR table and an ID table by the DB management unit 20 of the DB program 2 will be described.

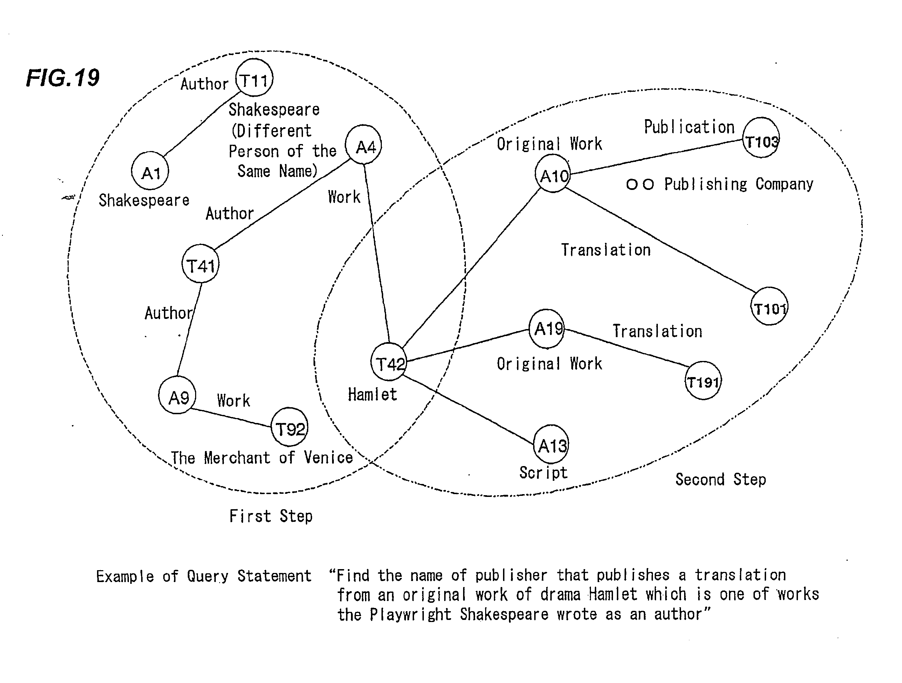

FIG. 19 shows data input to the DB server 12 (DB program 2; FIG. 18) shown in FIGS. 6 and 7, and search conditions to perform searching for data contained therein.

For example, data associated as shown in FIG. 19 is input to the management operation receiver 200 of the DB program 2.

The data shown in FIG. 19 contains A nodes and T nodes associated as described below, and node names are assigned to the T nodes (however, attributes of the A nodes (node type (NT) and node names, and attributes of the T nodes (node type (NT)) are omitted in (1) to (8) below and FIG. 19).
(1) "A node A1" and "T node T11" are associated together, an association role R "Author" is defined therebetween, and a node name "Shakespeare (different person of the same name)" is assigned to the "T node T11".
(2) "A node A9" and "T nodes T92 and T41" are associated together, association roles R "Work" and "Author" are defined therebetween, and node names "The Merchant of Venice" and "Shakespeare" are assigned to the "T nodes T92 and T42".
(3) "A node A4" and "T nodes T41 and T42" are associated together, association roles R "Author" and "Work" are defined therebetween, and a node name "Hamlet" is assigned to the "T node T42".
(4) "A node A13" and "T node T42" are associated together, and an association role R "Script" is defined therebetween.
(5) "A node A19" and "T node T42" are associated together, and an association role R "Original Work" is defined therebetween.
(6) "A node A10" and "T node T42" are associated together, and an association role R "Original Work" is defined therebetween.
(7) "A node A10" and "T nodes T103 and T101" are associated together, association roles R "Publication" and "Translation" are defined therebetween, and a node name "oo Publishing Company" is assigned to the "T node T103".
(8) "A node A19" and "T node T191" are associated together, and an association role R "Translation" is defined therebetween.

The management operation receiver 200 receives input data, and outputs the data to the AR entry creation unit 202 and the ID entry creation unit 204.

The AR entry creation unit 202 creates each entry of the AR table from the data shown in FIG. 19, and outputs the entry to the ARDB management unit 206.

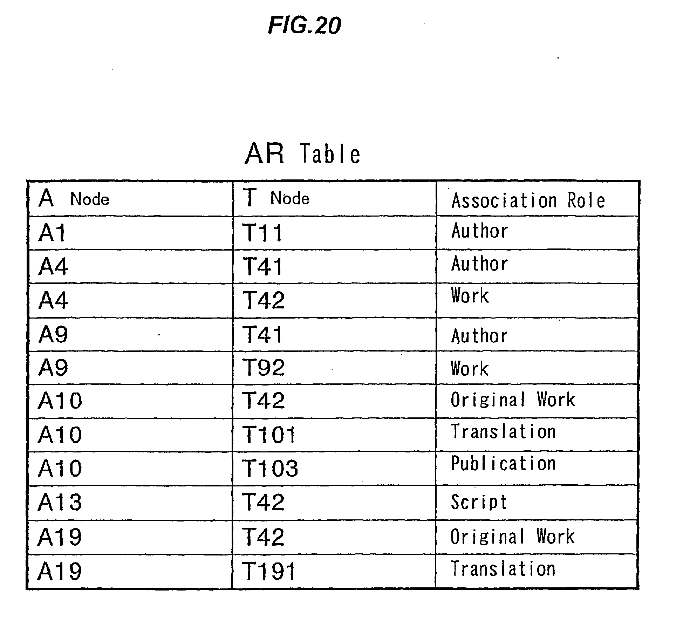

FIG. 20 shows an AR table created by the AR entry creation unit 202 (FIG. 18) and the ARDB management unit 206 and stored in the ARDB 240.

It is to be noted that in the drawings below, null indicates that there is no attribute (node type)/name (node name).

The ARDB management unit 206 sequentially adds the entries of the AR table input from the AR entry creation unit 202 to the AR table stored in the ARDB 240.

As a result of the processing by the AR entry creation unit 202 and the ARDB management unit 206, an AR table shown in FIG. 20 is created from data shown in FIG. 19, and stored in the ARDB 240.

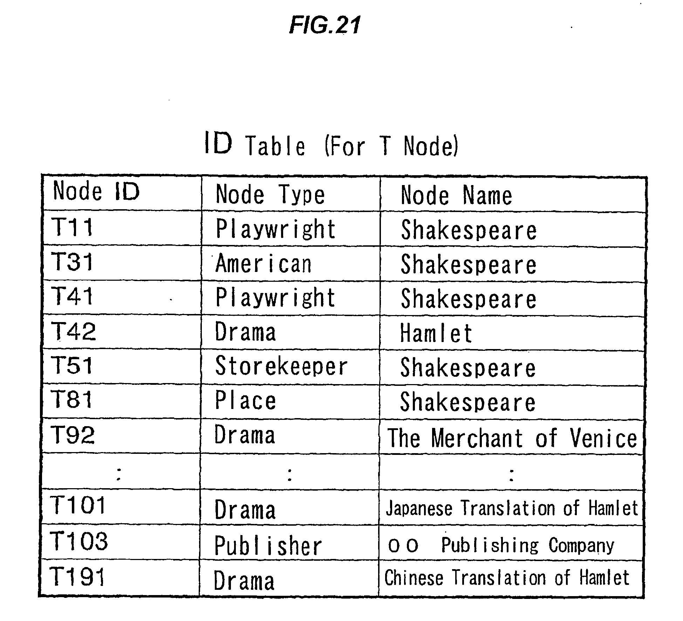

FIG. 21 shows a T node ID table created by the ID entry creation unit 204 (FIG. 18) and the IDDB management unit 208 and stored in the IDDB 242.

The ID entry creation unit 204 creates entries of the T node ID table from the data shown in FIG. 19, and outputs the entries to the IDDB management unit 208.

The IDDB management unit 208 sequentially adds the entries of the T node ID table input from the ID entry creation unit 204 to the ID table stored in the IDDB 242.

As a result of the processing by the ID entry creation unit 204 and the IDDB management unit 208, a T node ID table shown in FIG. 21 is created from the data shown in FIG. 19, and stored in the IDDB 242.

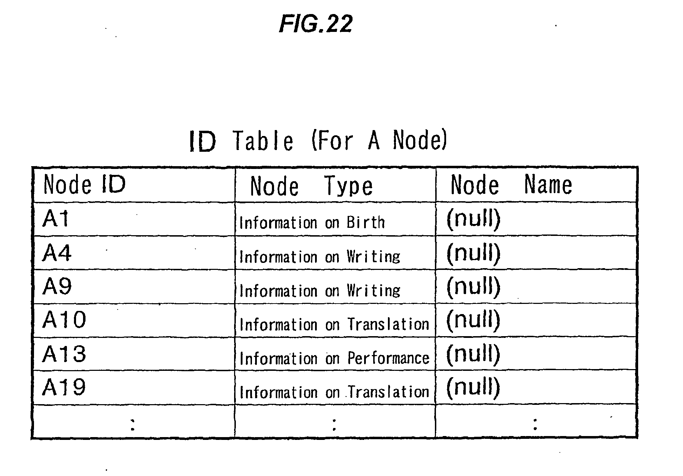

FIG. 22 shows an A node ID table created by the ID entry creation unit 204 (FIG. 18) and the IDDB management unit 208.

The ID entry creation unit 204 creates entries of the A node ID table from the data shown in FIG. 19, and outputs the entries to the IDDB management unit 208.

The IDDB management unit 208 sequentially adds the entries of the ID table input from the ID entry creation unit 204 to the A node IDDB table stored in the IDDB 244.

As a result of the processing by the ID entry creation unit 204 and the IDDB management unit 208, an A node ID table similar to that shown in FIG. 22 is created from the data shown in FIG. 19, and stored in the IDDB 244.

### [Data Search]

For example, when the searcher inputs a search condition "what is the name of publisher that publishes a translation from an original work of drama Hamlet which is one of works the Playwright Shakespeare wrote as an author?" in a form of a query statement to the input/output device 126 (FIG. 7) of the DB server 12, the search condition creation unit 262 analyzes this query statement, and partitions the query statement into two parts, first and second halves as shown in FIG. 19.

In the second half of the query statement "works the Playwright Shakespeare wrote as an author", to retrieve data regarding "Work", the search condition creating unit 262 sets an association role Rret of the T node Tret to be a search result as "Work".

The search condition creation unit 262 creates a search filter (R1 = "Author", N1 = "Shakespeare") from the second half "Shakespeare wrote as an author".

Further, the search condition creation unit 262 creates search conditions (Rret, (ANT1), ((R1, N1))) = (Work, (null), ((Author, Shakespeare))) corresponding to the second half of the query statement from the association role (Rret = "Work") of the T node Tret and the search filter (R1 = "Author", N1 = "Shakespeare").

In the first half of the query statement "what is the name of publisher that publishes a translation from an original work of drama Hamlet?", to retrieve information regarding "Publisher that publishes", the search condition creating unit 262 sets an association role Rret of the T node Tret to be a search result as "Publication".

The search condition creation unit 262 creates a first search filter (R1 = "Original Work", N1 = "Hamlet") from the condition that an "original work" of drama "Hamlet" included in the first half, and creates a second search filter (R2 = "Translation", N2 = "null (not specified)") from "Translation" included in the first half.

Further, the search condition creation unit 262 creates search conditions (Rret, (ANT1), ((R1, N1), (R2, N2))) = (Publication, (null), ((Original Work, Hamlet), (Translation, null))) corresponding to the first half of the query statement from the association role (Rret = "Publication"), the first search filter ("R1 = "Original Work", N1 = "Hamlet") and the second filter , (R2 = "Translation", N2 = "null").

Based on the search conditions created by the search condition creation unit 262, the search control unit 264 searches the ARDB 240 (AR table; FIG. 20) and the IDDB 242 (T node ID table; FIG. 21) through the ARDB search unit 266 and the IDDB search unit 268 to obtain search results as described below.

First, from the search conditions obtained from the second half of the query statement, the search control unit 264 performs the following.
(1) The search control unit 264 refers to the T node ID table stored in the IDDB 242 (FIG. 18) to retrieve all identifiers (ID) of T nodes whose node names are "Shakespeare", and obtains T11, T31, T41, T51, and T81 (FIG. 21) as a result of this processing.
(2) The search control unit 264 refers to the AR table (FIG. 20) stored in the ARDB 240 to retrieve all A node identifiers in which roles are "Author" and T node identifies match the T node identifiers obtained in the processing of (1), and obtains A1, A4 and A9 as a result of this processing.
(3) The search control unit 264 refers to the AR table to retrieve T node identifiers (ID; generally plural) corresponding to A nodes whose association roles R are "Work" among the A node identifiers obtained in the processing of (2), and obtains T42 and T92 as a result of this processing.
(4) The search control unit 264 refers to the ID table, and sets node names of identifiers corresponding to the T node identifiers obtained by the processing of (3) together with T node identifiers (ID) as search results.
   That is, the search control unit 264 performs searching based on the search conditions (Work, (null), ((Author, Shakespeare))) obtained from the second half of the query statement by the processing of (1) to (4), and obtains search results (T42, Hamlet), and (T92, the Merchant of Venice).
   Next, based on the search conditions obtained from the first half of the query statement and the search results corresponding to the second half, the search control unit 264 performs the following.
(5) From the search results (T42, Hamlet) and (T92, the Merchant of Venice) corresponding to the second half of the query statement, the search control unit 264 selects (T42, Hamlet) whose node name corresponds to the first search filter (original work, Hamlet), and obtains its node identifier (ID) T42.
(6) The search control unit 264 refers to the AR table to retrieve all the A node identifiers in which association roles are "Original Work" and T node identifiers match the node identifiers (ID) obtained by the processing of (5), and obtains A10 and A19 as a result.
(7) The search control unit 264 refers to the AR table to retrieve all identifiers whose roles are "Translation" among the A node identifiers obtained by the processing of (6), and obtains A10 and A19 as a result.
(8) The search control unit 264 refers to the AR table to retrieve T node identifiers corresponding to the A nodes whose roles are "Publication" among the A node identifiers obtained by the processing of (7), and obtains T103 as a result (when there are translations from a plurality of publishers, a plurality of T nodes are obtained).
(9) The search control unit 264 refers to the ID table, and sets node names of node IDs corresponding to the T node identifiers obtained by the processing of (8) together with node identifiers as search results (T103, o o Publishing Company).
   That is, the search control unit 264 performs searching based on the search conditions (Publication, (null), ((Original Work, Hamlet), (Translation, null))) obtained from the first half of the query statement by the processing of (5) to (9), and obtains the search results (T013, o o Publishing Company).
(10) The search control unit 264 displays the search results in the input/output device 126 (FIG. 7) or the like to the searcher.

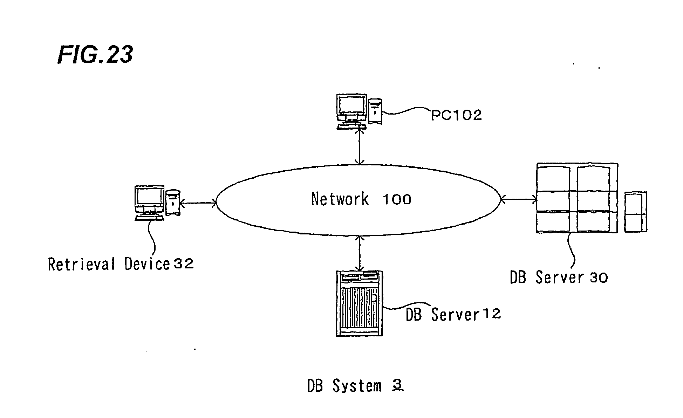

FIG. 23 shows a configuration of a second DB system 3.

Referring to FIG. 23, the second DB system 3 is configured by interconnecting the DB server 12, a DB server 30 for operating the DB management unit 20 and the DB unit 24 of the DB program 2 on hardware (FIG. 7) similar to the DB server 12, and a retrieval device 32 for operating the DB search unit 26 of the DB program 2 on hardware similar to the DB server 12 through a network 100.

Thus, the DB program 2 does not need to be always executed on one computer, but it may be distributed to a plurality of computers interconnected through a network to be executed.

### Industrial Applicability

The present invention can be used for the database and data search.

## Claims

1. A database server for associating one or more association nodes with one or more topic nodes to create a database, each of the association nodes being associated with the one or more topic nodes, and an association attribute indicating an association being defined respectively between the associated association nodes and the topic nodes, the database server comprising:
a first entry creation means for creating a first entry including an identifier indicating any of the association nodes, an identifier indicating a topic node associated with the association node, and an association attribute defined between the association node and the topic node; and
a first database for storing the one or more of the created first entries.

2. A database server according to claim 1, wherein the association attribute defined between the associated association node and the topic node indicates a role defined between the nodes.

3. A database server according to claim 1, wherein:
for each of the topic nodes, a topic content indicating a content of the topic node is defined; and
the database server further comprising:
a second entry creation means for creating a second entry including an identifier indicating any of the topic nodes, and the topic content defined for the topic node; and
a second database for storing the one or more of the created second entries.

4. A database server according to claim 3, wherein the topic content includes a name of the topic node.

5. A database server according to claim 3, wherein for each of the association nodes, an association node attribute indicating an attribute of the association node is defined; and
the database server further comprising:
a third entry creation means for creating a third entry including an identifier indicating any of the association nodes, and the association node attribute of the association node; and
a third database for storing the one or more of the created third entries.

6. A database server according to claim 1, wherein for each of the topic nodes, a topic attribute indicating an attribute of the topic node is defined; and
the second entry creation means creates the second entry including the identifier indicating any of the topic nodes, and the topic content and the topic attribute defined for the topic node.

7. A database server according to claim 3, wherein:
the topic node is associated with the one or more association nodes, and when the topic node is associated with plural association nodes, the plural association nodes are associated with one another via the topic node associated with the association nodes; and
the second database stores identifiers and topic contents of plural topic nodes associated with the association nodes as a set of plural second entries including the identifiers of the topic nodes.

8. A database server according to claim 6, wherein:
the topic node is associated with the one or more association nodes, and when the topic node is associated with plural association nodes, the plural association nodes are associated with one another via the topic node associated with the association nodes; and
the second database stores identifiers, topic contents and topic attributes of plural topic nodes associated with the association nodes as a set of plural second entries including the identifiers of the topic nodes.

9. A database server according to claim 1, wherein:
the topic node is associated with the one or more association nodes, and when the topic node is associated with plural association nodes, the plural association nodes are associated with one another via the topic node associated with the association nodes; and
the first database stores associations between the association nodes and the plural topic nodes associated with the association nodes as a set of plural first entries including the identifiers of the association nodes.

10. A database server according to claim 5, wherein:
when there is an association between the two or more association nodes, a new association node is provided, and new topic nodes are provided among the new association node and the association nodes;
a first association attribute is defined by a relation among the new topic node and the association nodes and a second association attribute is defined by a relation between the new topic node and the new association node;
the first entry creation means creates one or more first entries including the identifier indicating any of the association nodes, an identifier indicating any of the new topic nodes, and the first association attribute, and also creates one or more first entries including an identifier indicating any of the new association nodes, the identifier indicating any of the new topic nodes, and the second association attribute; and
the first database stores the created first entries.

11. A database server according to claim 10, wherein:
in the new topic node, a topic content indicating a content of the topic node and a topic attribute indicating an attribute of the topic node are defined;
the second entry creation means creates one or more second entries including the new topic node identifier, the topic content, and the topic attribute; and
the second database stores the created second entries.

12. A database server according to claim 11, wherein:
the third entry creation means creates one or more third entries including the identifier indicating any of the association nodes and its association attribute; and
the third database stores the created third entries.

13. A database creation method of creating a database by associating one or more association nodes with one or more topic nodes to structure a database, each of the association nodes being associated with the one or more topic nodes, and an association attribute indicating an association being defined respectively between the associated association nodes and the topic nodes, the database creation method comprising:
a first entry creation step of creating a first entry including an identifier indicating any of the association nodes, an identifier indicating a topic node associated with the association node, and an association attribute defined between the association node and the topic node; and
a first entry storage step of storing the one or more of the created first entries in the first database.

14. A database creation method according to claim 13, wherein for each of the topic nodes, a topic content indicating a content of the topic node is defined,
the database creation method further comprising:
a second entry creation step of creating a second entry including an identifier indicating any of the topic nodes, and the topic content defined for the topic node; and
a second entry storage step of storing the one or more of the created second entries in the second database.

15. A program for creating a database by associating one or more association nodes with one or more topic nodes to create a database, each of the association nodes being associated with the one or more topic nodes, and an association attribute indicating an association being defined respectively between the associated association nodes and the topic nodes, the program causing a computer to execute:
a first entry creation step of creating a first entry including an identifier indicating any of the association nodes, an identifier indicating a topic node associated with the association node, and an association attribute defined between the association node and the topic node; and
a first entry storage step of storing the one or more of the created first entries in the first database.

16. A program according to claim 15, wherein:
for each of the topic nodes, a topic content indicating a content of the topic node is defined,
the program causing the computer to further execute:
a second entry creation step of creating a second entry including an identifier indicating any of the topic nodes, and the topic content defined for the topic node; and
a second entry storage step of storing the one or more of the created second entries in the second database.

17. A database search device for searching:
a first database for storing one or more association nodes, one or more topic nodes respectively associated with the association nodes, and an association attribute defined respectively between the association nodes and the topic nodes associated together, and for storing one or more first entries each including an identifier indicating any of the association nodes, an identifier indicating a topic node associated with the association node, and an association attribute defined between the association node and the topic node; and
a second database for storing one or more second entries including an identifier indicating any of the topic nodes, and the topic content defined for the topic node, as data of the topic node, the database search device comprising:
search condition receiving means for receiving a search condition including a first condition data indicating one or more arbitrary topic contents and one or more arbitrary association attributes, and a second condition data indicating one or more second association attributes of the topic nodes as search objects; and
search means for searching the first database and the second database based on the received search condition for data of the topic nodes as the search objects.

18. A database search device according to claim 17, wherein the search means performs:
(a) a process for searching the second database and creating a topic node identifier set that is the topic content indicated by the first condition data and includes an identifier of the topic node in the second entry including any of the contents;
(b) a process for searching the first database and creating an association node identifier set including an identifier of the association node in the first entry including any one of the topic node identifiers belonging to the association node identifier set and any one of the association attributes indicated by the first condition data;
(c) a process for searching the first database and creating a topic node identifier set of identifiers of the topic nodes in the first entry including any one of the identifiers belonging to the association node identifier set and any one of the association attributes indicated by the second condition data; and
(d) a process for searching the second database and creating a search result of the topic node as the search object based on the data in the second entry including the identifier belonging to the topic node identifier set.

19. A database search device according to claim 18, wherein: the search result obtained in the process (d) includes the topic content of the topic node; and
the search means repeats by plural times:
(e) a process for searching the second database and creating a topic node identifier set including identifiers of the topic nodes that are in the topic content indicated by the first condition data or in the search result and that include are in the second entry including any of the topic contents; and
the processes (b) to (d); and
in the last process (d), the search means creates the search result of the topic node as the search object based on data in the second entry including the identifier belonging to the topic node identifier set.

20. A database search device according to claim 19, wherein:
for each of the topic nodes, a topic attribute indicating an attribute of the topic node is further defined;
the second database stores the second entry including the identifier, the topic content, and the topic attribute;
the search condition receiving means receives search conditions including the first condition data, the second condition data, and a third condition data indicating the topic attribute; and
the search means searches the first database and the second database for the data of the topic node as the search object based on the received search conditions.

21. A database search device according to claim 17, wherein the search means performs:
(f) a process for searching the second database and creating a topic node identifier set that is the topic content indicated by the first condition data and is the topic content in the second entry and a topic attribute indicated by the third condition data and that includes an identifier of the topic node in the second entry including the topic attribute in the second entry;
(b) a process for searching the first database and creating an association node identifier set including an identifier of the association node in the first entry including any any one of the topic node identifiers belonging to the association node identifier set and any one of the association attributes indicated by the first condition data;
(c) a process for searching the first database and creating a topic node identifier set of identifiers of the topic nodes in the first entry including any one of the identifiers belonging to the association node identifier set and any one of the association attributes indicated by the second condition data; and
(d) a process for searching the second database and creating a search result of the topic node as the search object based on the data in the second entry including the identifier belonging to the topic node identifier set.

22. A database search device according to claim 21, wherein: the search result obtained in the process (d) includes the topic content and the topic attribute of the topic node; and
the search means repeats by plural times:
(g) a process for searching the second database and creating a topic node identifier set including identifiers of the topic nodes in the second entry that are topic contents indicated by the first condition data or topic contents in the search result, and are topic contents in the second entry and topic attributes indicated by the third condition data or topic attributes in the search result, and includes topic attributes in the second entry; and
the processes (b) to (d), and
in the last process (d), the search means creates the search result of the topic node as the search object based on data in the second entry including the identifier belonging to the topic node identifier set.

23. A database search device according to claim 17, for further searching a third database storing one or more entries each including the identifier indicating any of the association nodes and an attribute of the association node, wherein:
the search condition receiving means receives search conditions further including fourth condition data indicating the attribute of the association node; and
the search means searches the first database, the second database, and the third database based on the received search conditions for the data of the topic node as the search object.

24. A database search device according to claim 23, further comprising identifier set creation means for creating a set of identifiers of association nodes in an entry including the attributes of the association nodes indicated by the fourth condition data in the received search conditions of the entries stored in the third database,
wherein the search means searches for the data of the topic node as the search object using the created association node identifier set.

25. A database search method of searching:
a first database for storing one or more association nodes, one or more topic nodes respectively associated with the association nodes, and an association attribute defined respectively between the association nodes and the topic nodes associated together, and for storing one or more first entries each including an identifier indicating any of the association nodes, an identifier indicating a topic node associated with the association node, and an association attribute defined between the association node and the topic node; and
a second database for storing one or more second entries including an identifier indicating any of the topic nodes, and the topic content defined for the topic node, as data of the topic node, the database search method comprising:
a search condition receiving step of receiving a search condition including a first condition data indicating one or more arbitrary topic contents and one or more arbitrary association attributes, and a second condition data indicating one or more second association attributes of the topic nodes as search objects; and
a search step of searching the first database and the second database based on the received search condition for data of the topic nodes as the search objects.

26. A database search method according to claim 25, wherein:
for each of the topic nodes, a topic attribute indicating an attribute of the topic node is further defined;
the second database stores the second entry including the identifier, the topic content, and the topic attribute;
the search condition receiving step includes receiving search conditions including the first condition data, the second condition data, and a third condition data indicating the topic attribute; and
the search step includes searching the first database and the second database for the data of the topic node as the search object based on the received search conditions.

27. A program for causing a computer to conduct searching for: a first database for storing one or more association nodes, one or more topic nodes respectively associated with the association nodes, and an association attribute defined respectively between the association nodes and the topic nodes associated together, and for storing one or more first entries each including an identifier indicating any of the association nodes, an identifier indicating a topic node associated with the association node, and an association attribute defined between the association node and the topic node; and
a second database for storing one or more second entries including an identifier indicating any of the topic nodes, and the topic content defined for the topic node, as data of the topic node, the program causing a computer to execute:
a search condition receiving step of receiving a search condition including a first condition data indicating one or more arbitrary topic contents and one or more arbitrary association attributes, and a second condition data indicating one or more second association attributes of the topic nodes as search objects; and
a search step of searching the first database and the second database based on the received search condition for data of the topic nodes as the search objects.

28. A program according to claim 27, wherein:
for each of the topic nodes, a topic attribute indicating an attribute of the topic node is further defined;
the second database stores the second entry including the identifier, the topic content, and the topic attribute;
the search condition receiving step receives search conditions including the first condition data, the second condition data, and third condition data indicating the topic attribute; and
the search step searches for the first database and the second database for the data of the topic node as the search object based on the received search conditions.

29. A program according to claim 77, wherein the search step includes performing:
(a) a process for searching the second database and creating a topic node identifier set that is the topic content indicated by the first condition data and includes an identifier of the topic node in the second entry including any of the contents;
(b) a process for searching the first database and creating an association node identifier set including an identifier of the association node in the first entry including any one of the topic node identifiers belonging to the association node identifier set and any one of the association attributes indicated by the first condition data;
(c) a process for searching the first database and creating a topic node identifier set of identifiers of the topic nodes in the first entry including any one of the identifiers belonging to the association node identifier set and any one of the association attributes indicated by the second condition data; and
(d) a process for searching the second database and creating a search result of the topic node as the search object based on the data in the second entry including the identifier belonging to the topic node identifier set.
